# EUROPEAN PATENT SPECIFICATION

(11) **EP 3 790 666 B1**
(45) Date of publication and mention of the grant of the patent: **28.06.2023**
(21) Application number: 19722875.2
(22) Date of filing: 07.05.2019
(51) Int. Cl.: B05D 3/00, B05D 3/06, B05D 5/06, C09D 11/037, C09D 11/101, B42D 25/369, H01F 7/02

(54) **MAGNETIC ASSEMBLIES, APPARATUSES AND PROCESSES FOR PRODUCING OPTICAL EFFECT LAYERS COMPRISING ORIENTED NON-SPHERICAL MAGNETIC OR MAGNETIZABLE PIGMENT PARTICLES**
MAGNETISCHE ANORDNUNGEN, VORRICHTUNGEN UND VERFAHREN ZUR HERSTELLUNG VON SCHICHTEN MIT OPTISCHEM EFFEKT MIT AUSGERICHTETEN ASPHÄRISCHEN MAGNETISCHEN ODER MAGNETISIERBAREN PIGMENTPARTIKELN
ENSEMBLES MAGNÉTIQUES, APPAREILS ET PROCÉDÉS DE PRODUCTION DE COUCHES À EFFET OPTIQUE COMPRENANT DES PARTICULES PIGMENTAIRES MAGNÉTIQUES OU MAGNÉTISABLES ORIENTÉES NON SPHÉRIQUES

(30) Priority: 08.05.2018 EP 18171312
(43) Date of publication of application: 17.03.2021
(73) Proprietor: SICPA HOLDING SA, 1008 Prilly (CH)
(72) Inventor: AMERASINGHE, Cédric, 1080 Les Cullayes (CH); SCHMID, Mathieu, 1005 Lausanne (CH); DESPLAND, Claude-Alain, 1030 Bussigny (CH)
(74) Representative: Hoffmann Eitle
(86) International application number: PCT/EP2019/061678
(87) International publication number: WO 2019/215148

(56) References cited:
- US-A1- 2010 040 799
- US-A1- 2014 077 485
- US-A1- 2018 093 518

## Description

### FIELD OF THE INVENTION

The present invention relates to the field of the protection of value documents and value commercial goods against counterfeit and illegal reproduction. In particular, the present invention relates to optical effect layers (OELs) showing a viewing-angle dependent optical effect, magnetic assemblies and apparatuses and processes for producing said OELs, as well as uses of said OELs as anti-counterfeit means on documents.

### BACKGROUND OF THE INVENTION

The use of inks, coating compositions, coatings, or layers, containing magnetic or magnetizable pigment particles, in particular non-spherical optically variable magnetic or magnetizable pigment particles, for the production of security elements and security documents is known in the art.

Security features, e.g. for security documents, can be classified into "covert" and "overt" security features. The protection provided by covert security features relies on the concept that such features are hidden, typically requiring specialized equipment and knowledge for their detection, whereas "overt" security features are easily detectable with the unaided human senses, e.g. such features may be visible and/or detectable via the tactile senses while still being difficult to produce and/or to copy. However, the effectiveness of overt security features depends to a great extent on their easy recognition as a security feature, because users will only then actually perform a security check based on such security feature if they are aware of its existence and nature.

Coatings or layers comprising oriented magnetic or magnetizable pigment particles are disclosed for example in US 2,570,856; US 3,676,273; US 3,791,864; US 5,630,877 and US 5,364,689. Magnetic or magnetizable pigment particles in coatings allow for the production of magnetically induced images, designs and/or patterns through the application of a corresponding magnetic field, causing a local orientation of the magnetic or magnetizable pigment particles in the unhardened coating, followed by hardening the latter. This results in specific optical effects, i.e. fixed magnetically induced images, designs or patterns which are highly resistant to counterfeit. The security elements based on oriented magnetic or magnetizable pigments particles can only be produced by having access to both the magnetic or magnetizable pigment particles or a corresponding ink or composition comprising said particles, and the particular technology employed to apply said ink or composition and to orient said pigment particles in the applied ink or composition.

Moving-ring effects have been developed as efficient security elements. Moving-ring effects consist of optically illusive images of objects such as funnels, cones, bowls, circles, ellipses, and hemispheres that appear to move in any x-y direction depending upon the angle of tilt of said optical effect layer. Methods for producing moving-ring effects are disclosed for example in EP 1 710 756 A1, US 8,343,615, EP 2 306 222 A1, EP 2 325 677 A2, and US 2013/084411.

WO 2011/092502 A2 discloses an apparatus for producing moving-ring images displaying an apparently moving ring with changing viewing angle. The disclosed moving-ring images might be obtained or produced by using a device allowing the orientation of magnetic or magnetizable particles with the help of a magnetic field produced by the combination of a soft magnetizable sheet and a spherical magnet having its magnetic axis perpendicular to the plane of the coating layer and disposed below said soft magnetizable sheet.

The prior art moving ring images were generally produced by alignment of the magnetic or magnetizable particles according to the magnetic field of only one rotating or static magnet. Since the magnetic field lines of only one magnet generally bend relatively softly, i.e. have a low curvature, also the change in orientation of the magnetic or magnetizable particles is relatively soft over the surface of the OEL. Further, the intensity of the magnetic field decreases rapidly with increasing distance from the magnet when only a single magnet is used. This makes it difficult to obtain a highly dynamic and well-defined feature through orientation of the magnetic or magnetizable particles, and may result in visual effects that exhibit blurred ring edges.

WO 2011/092502 A2 discloses optical effect layers (OEL) comprising a plurality of magnetically oriented magnetic or magnetizable particles, which are dispersed in a coating. The specific magnetic orientation pattern of the disclosed OELs provides a viewer the optical effect or impression of a loop-shaped body that moves upon tilting of the OEL. The disclosed OELs are produced by using an apparatus comprising a soft magnetizable sheet and a spherical permanent magnet shaped having its North-South axis perpendicular to the plane of the coating layer comprising the magnetic or magnetizable particles to be oriented.

WO 2014/108404 A2 discloses optical effect layers (OEL) comprising a plurality of magnetically oriented non-spherical magnetic or magnetizable particles, which are dispersed in a coating. The specific magnetic orientation pattern of the disclosed OELs provides a viewer the optical effect or impression of a loop-shaped body that moves upon tilting of the OEL. Moreover, WO 2014/108404 A2 discloses OELs further exhibiting an optical effect or impression of a protrusion within the loop-shaped body caused by a reflection zone in the central area surrounded by the loop-shaped body. The disclosed protrusion provides the impression of a three-dimensional object, such as a half-sphere, present in the central area surrounded by the loop-shape body.

WO 2014/108303 A1 and US 2018/0093518 A1 disclose optical effect layers (OEL) comprising a plurality of magnetically oriented non-spherical magnetic or magnetizable particles, which are dispersed in a coating. The specific magnetic orientation pattern of the disclosed OELs provides a viewer the optical effect or impression of a plurality of nested loop-shaped bodies surrounding one common central area, wherein said bodies exhibit a viewing-angle dependent apparent motion. Moreover, WO 2014/108303 A1 and US 2018/0093518 A1 disclose OELs further comprising a protrusion which is surrounded by the innermost loop-shaped body and partly fills the central area defined thereby. The disclosed protrusion provides the illusion of a three-dimensional object, such as a half-sphere, present in the central area.

CN 104442055 B and CN 204566894U disclose devices for producing optical effect layers (OEL) comprising a plurality of magnetically oriented non-spherical magnetic or magnetizable particles, which are dispersed in a coating. The specific magnetic orientation pattern of the disclosed OELs provides a viewer the optical effect or impression of a loop-shaped body that moves upon tilting of the OEL. The disclosed OELs are produced by using a device comprising a first magnet and a second magnet, wherein the second magnet expands the tilted magnetic area of the first magnet by means of magnetic coupling.

US 2014/0077485 A1 discloses optical effect layers and methods for producing optical effect layers in which a stationary image is surrounded by a frame that dynamically moves with respect to the stationary image upon tilting the optical effect layer with respect to a light source.

A need remains for security features displaying an eye-catching bright loop-shaped effect on a substrate with good quality, wherein said security features can be easily verified, must be difficult to produce on a mass-scale with the equipment available to a counterfeiter, and which can be provided in great number of possible shapes and forms.

### SUMMARY OF THE INVENTION

Accordingly, it is an object of the present invention to overcome the deficiencies of the prior art as discussed above.

In a first aspect, the present invention provides a process for producing an optical effect layer (OEL) (x10) on a substrate (x20) and optical effect layers (OEL) obtained thereof, said process comprising the steps of:
i) applying on a substrate (x20) surface a radiation curable coating composition comprising non-spherical magnetic or magnetizable pigment particles, said radiation curable coating composition being in a first state, said first state being a liquid state;
ii) exposing the radiation curable coating composition to a magnetic field of a magnetic assembly (x00) comprising:
   a) a first magnetic-field generating device (x30) having its North-South magnetic axis substantially perpendicular to the substrate (x20) surface and having length L1;
   b) a second magnetic-field generating device (x40) having its North-South magnetic axis substantially perpendicular to the substrate (x20) surface and having a length L3,
   c) a flat pole piece (x50) having a length L5,
      wherein the first magnetic-field generating device (x30) and the second magnetic-field generating device (x40) have a same magnetic field direction,
      wherein the first magnetic-field generating device (x30) faces the substrate (x20) and is disposed on top of the pole piece (x50),
      wherein the second magnetic-field generating device (x40) faces the environment and is disposed below the flat pole piece (x50),
      wherein the length L1 of the first magnetic-field generating device (x30) is smaller than the length L3 of the second magnetic-field generating device (x40),
      wherein the length L1 of the first magnetic-field generating device (x30) is smaller than the length L5 of the flat pole piece (x50), and
      wherein the length L3 of the second magnetic-field generating device (x40) is smaller than the length L5 of the pole piece (x50),
   so as to orient at least a part of the non-spherical magnetic or magnetizable pigment particles; and
iii) at least partially curing the radiation curable coating composition of step ii) to a second state so as to fix the non-spherical magnetic or magnetizable pigment particles in their adopted positions and orientations,
wherein the optical effect layer provides an optical impression of a moon crescent moving and rotating upon tilting the substrate comprising the optical effect layer (OEL).

In a further aspect, the present invention provides optical effect layers (OEL) prepared by the process described herein.

In a further aspect, a use of the optical effect layer (OEL) is provided for the protection of a security document against counterfeiting or fraud or for a decorative application.

In a further aspect, the present invention provides a security document or a decorative element or object comprising one or more optical effect layers (OELs) described herein.

In a further aspect, the present invention provides a magnetic assembly (x00) such as those described herein for producing the optical effect layer (OEL) (x10) described herein and a use of said magnetic assembly (x00) for producing the optical effect layer (OEL) (x10) on the substrate (x20) described herein.

In a further aspect, the present invention provides a magnetic assembly (x00) such as those described herein for producing the optical effect layer (OEL) (x10) described herein, wherein the magnetic assembly (x00) is disposed in a holder (x01) mounted on a transferring device being preferably a rotating magnetic cylinder.

In a further aspect, the present invention provides a printing apparatus for producing the optical effect layer (OEL) described herein on a substrate such as those described herein, wherein the printing apparatus comprises at least one of the magnetic assemblies (x00) described herein. The printing apparatus described herein comprises a rotating magnetic cylinder comprising at least one of the magnetic assemblies (x00) described herein or a flatbed printing unit comprising at least one of the magnetic assemblies (x00) described herein.

In a further aspect, the present invention provides a use of the printing apparatus described herein for producing the optical effect layer (OEL) described herein on a substrate such as those described herein.

### BRIEF DESCRIPTION OF DRAWINGS

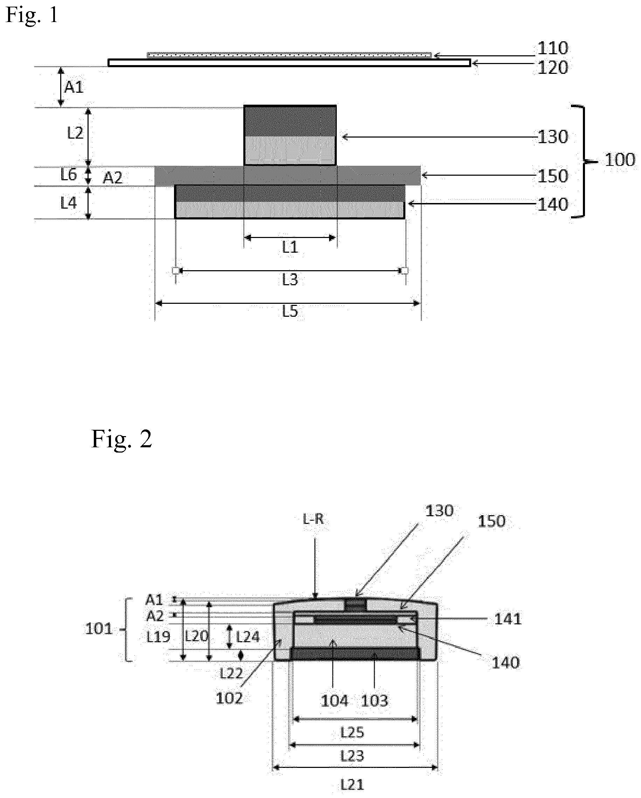

**Fig. 1** schematically illustrates a magnetic assembly (100) for producing an optical effect layer (OEL) (110) on a substrate (120) surface, wherein the magnetic assembly (100) comprises a) a first magnetic-field-generating device (130), in particular a disc-shaped or a square-shaped magnetic-field-generating device, having a length L1, b) a second magnetic-field-generating device (140), in particular a disc-shaped a square-shaped magnetic-field-generating device, having a length L3, and c) a flat pole piece (150), in particular a flat square-shaped pole piece, having a length L5.
**Fig. 2** schematically illustrate a cross-section ( of a magnetic assembly (100) enclosed in a holder (101), wherein the magnetic assembly (100) comprises a) a first magnetic-field-generating device (130), in particular a disc-shaped or a square-shaped magnetic-field generating device, b) a second magnetic-field-generating device (140), in particular a disc-shaped or a square-shaped magnetic-field-generating device, and c) a flat pole piece (150), in particular a flat square-shaped pole piece, and wherein the holder (101) comprises a domed-shaped lid (102) having a length L21, a central thickness L19 and an edge thickness L20, a bottom locking (103) having a length L23 and a thickness L22, and an optional wedge 104 having a length L25 and a thickness (L24).

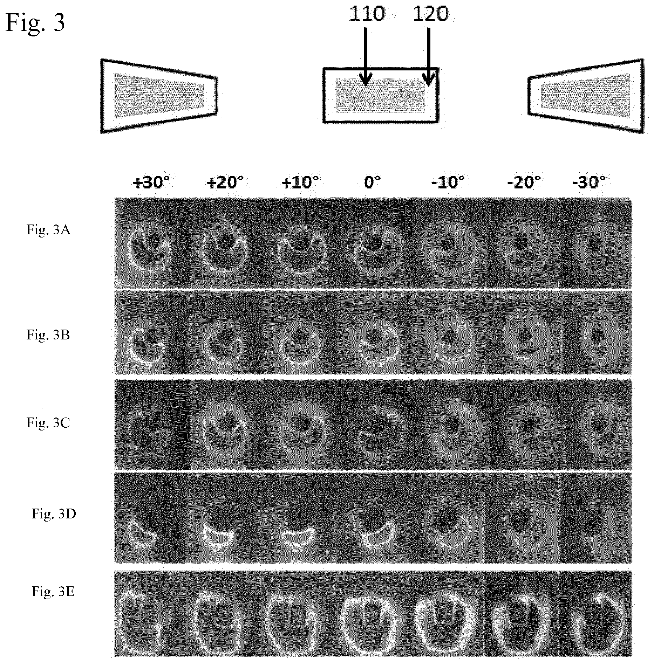

**Fig. 3A-3D** show pictures of OELs obtained by using the magnetic assembly (100) illustrated in Figs. 1 as viewed at different viewing angles with the first and second magnetic-field-generating device (130 and 140) being a disc-shaped magnetic-field-generating device.
**Fig. 3E** show pictures of an OEL obtained by using the magnetic assembly (100) illustrated in Figs. 1 as viewed at different viewing angles with the first and second magnetic-field-generating device (130 and 140) being a square-shaped magnetic-field-generating device.

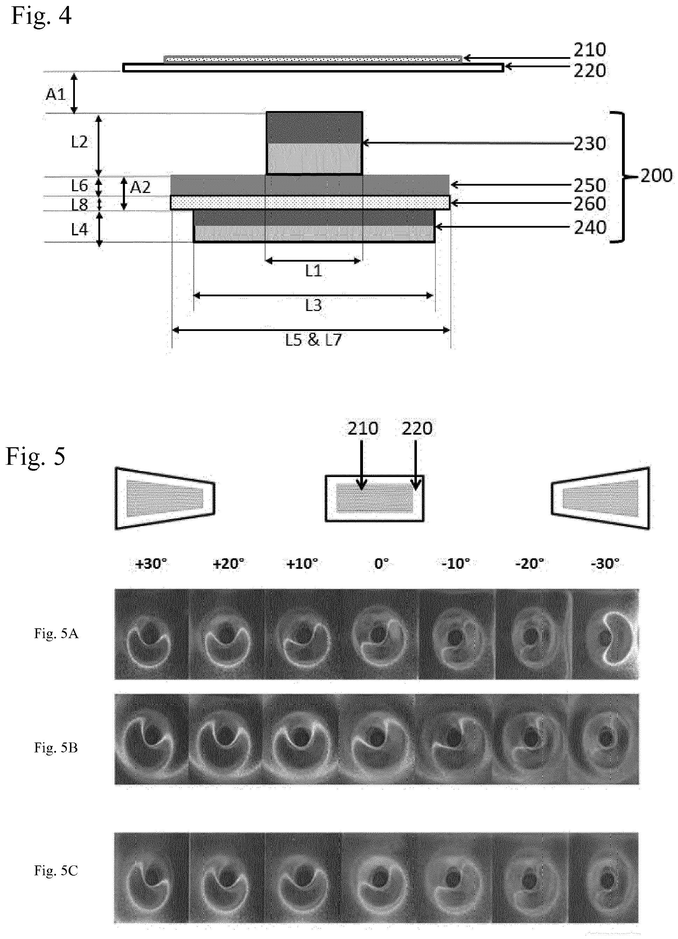

**Fig. 4** schematically illustrates a magnetic assembly (200) for producing an optical effect layer (OEL) (210) on a substrate (220) surface, wherein the magnetic assembly (200) comprises a) a first magnetic-field-generating device (230), in particular a disc-shaped magnetic-field-generating device, having a length L1, b) a second magnetic-field-generating device (240), in particular a disc-shaped magnetic-field-generating device, having a length L3, c) a flat pole piece (250), in particular a flat square-shaped or a disc-shaped pole piece, having a length L5 and d) a non-magnetic plate (260), in particular a square-shaped non-magnetic plate.
**Fig. 5A-5C** show pictures of OELs obtained by using the magnetic assembly (200) illustrated in Fig. 4 as viewed at different viewing angles.

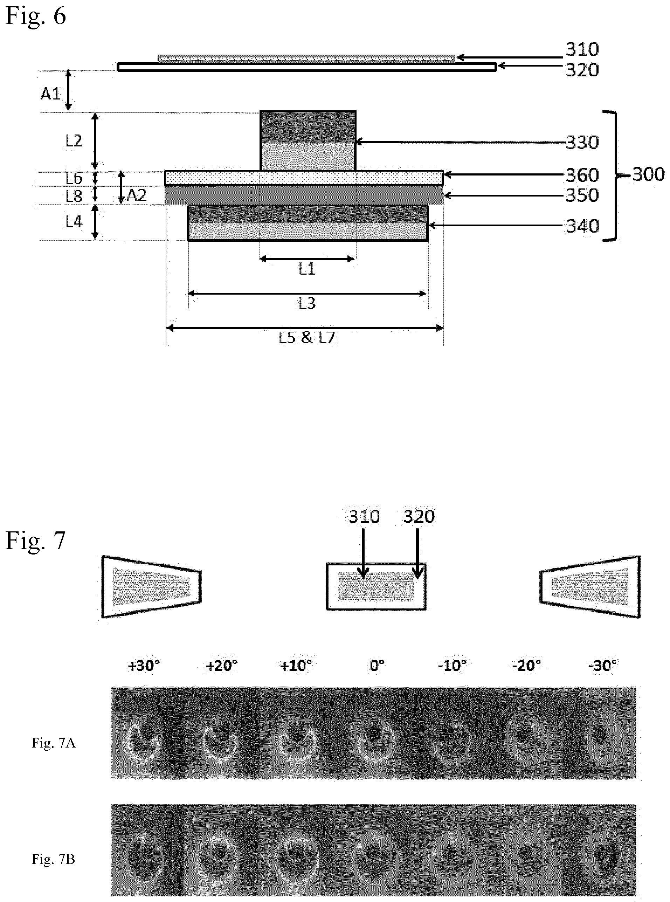

**Fig. 6** schematically illustrates a magnetic assembly (300) for producing an optical effect layer (OEL) (310) on a substrate (320) surface, wherein the magnetic assembly (300) comprises a) a first magnetic-field-generating device (330), in particular a disc-shaped magnetic-field-generating device, having a length L1, b) a second magnetic-field-generating device (340), in particular a disc-shaped magnetic-field-generating device, having a length L3, c) a flat pole piece (350), in particular a flat square-shaped pole piece, having a length L5 and d) a non-magnetic plate (360), in particular a square-shaped non-magnetic plate.
**Fig. 7A-7B** show pictures of OELs obtained by using the magnetic assembly (300) illustrated in Fig. 6 as viewed at different viewing angles.

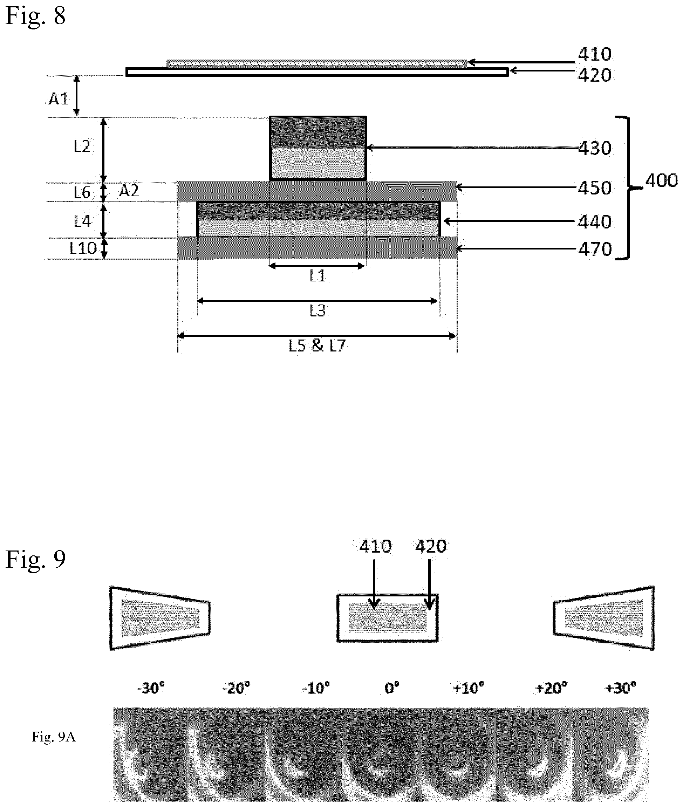

**Fig. 8** schematically illustrates a magnetic assembly (400) for producing an optical effect layer (OEL) (410) on a substrate (420) surface, wherein the magnetic assembly (400) comprises a) a first magnetic-field-generating device (430), in particular a disc-shaped magnetic-field-generating device, having a length L1, b) a second magnetic-field-generating device (440), in particular a disc-shaped magnetic-field-generating device, having a length L3, c) a flat pole piece (450), in particular a flat square-shaped pole piece, having a length L5 and d) a second flat pole piece (470), in particular a flat square-shaped second pole piece having a length L7.
**Fig. 9A** show pictures of OELs obtained by using the magnetic assembly (400) illustrated in Fig. 8 as viewed at different viewing angles.

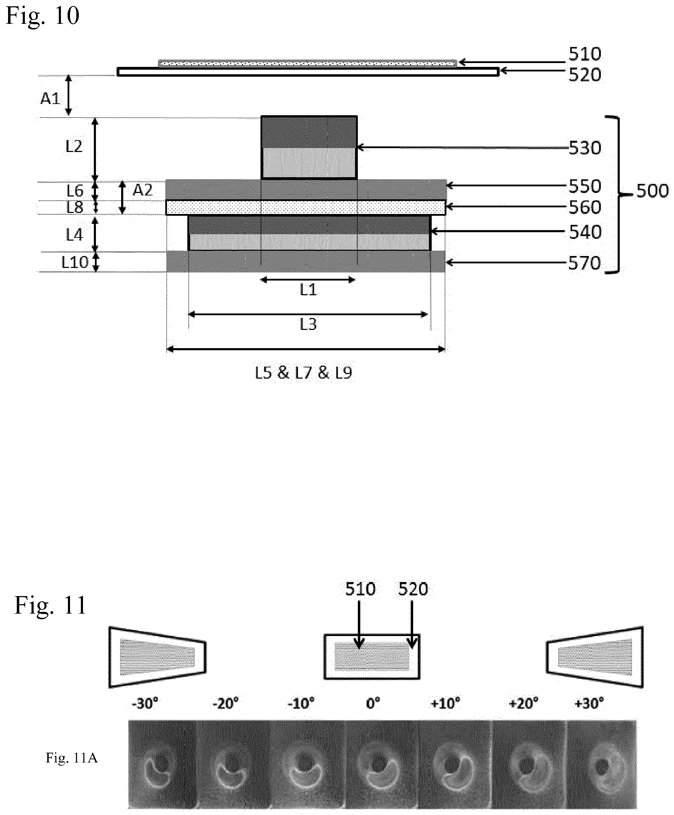

**Fig. 10** schematically illustrates a magnetic assembly (500) for producing an optical effect layer (OEL) (510) on a substrate (520) surface, wherein the magnetic assembly (500) comprises a) a first magnetic-field-generating device (530), in particular a disc-shaped magnetic-field-generating device, having a length L1, b) a second magnetic-field-generating device (540), in particular a disc-shaped magnetic-field-generating device, having a length L3, c) a flat pole piece (550), in particular a flat square-shaped pole piece, having a length L5, d) a non-magnetic plate (560), in particular a square-shaped non-magnetic plate, and e) a second flat pole piece (570), in particular a flat square-shaped second pole piece.
**Fig. 11A** show pictures of OELs obtained by using the magnetic assembly (500) illustrated in Fig. 10 as viewed at different viewing angles.

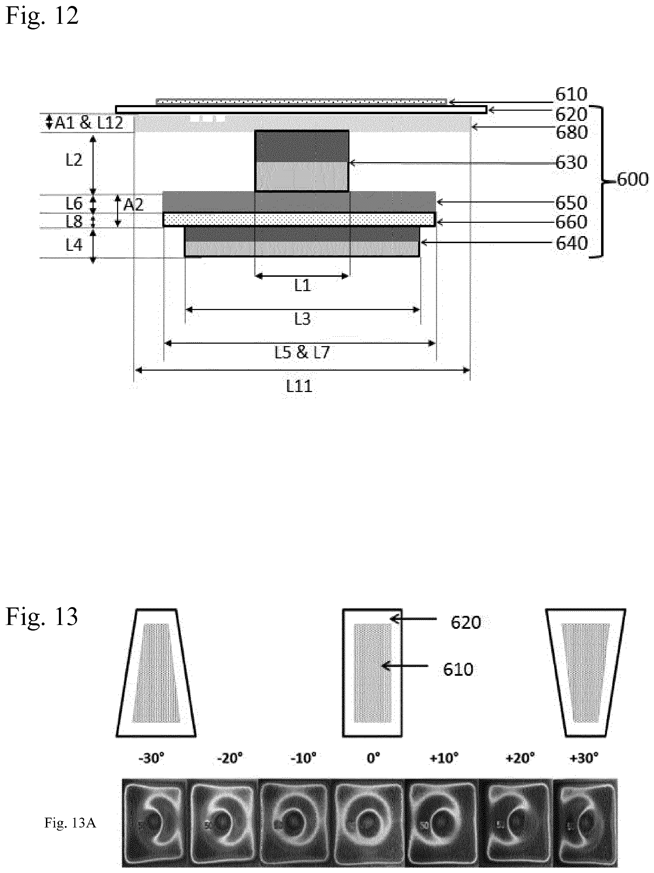

**Fig. 12** schematically illustrates a magnetic assembly (600) for producing an optical effect layer (OEL) (610) on a substrate (620) surface, wherein the magnetic assembly (600) comprises a) a first magnetic-field-generating device (630), in particular a disc-shaped magnetic-field-generating device, having a length L1, b) a second magnetic-field-generating device (640), in particular a disc-shaped magnetic-field-generating device, having a length L3, c) a flat pole piece (650), in particular a flat square-shaped pole piece, having a length L5, d) a non-magnetic plate (660), in particular a square-shaped non-magnetic plate, and e) a magnetized plate (x80), in particular a square-shaped magnetized plate, comprising engraved indicia.
**Fig. 13A** show pictures of OELs obtained by using the magnetic assembly (600) illustrated in Fig. 12 as viewed at different viewing angles.

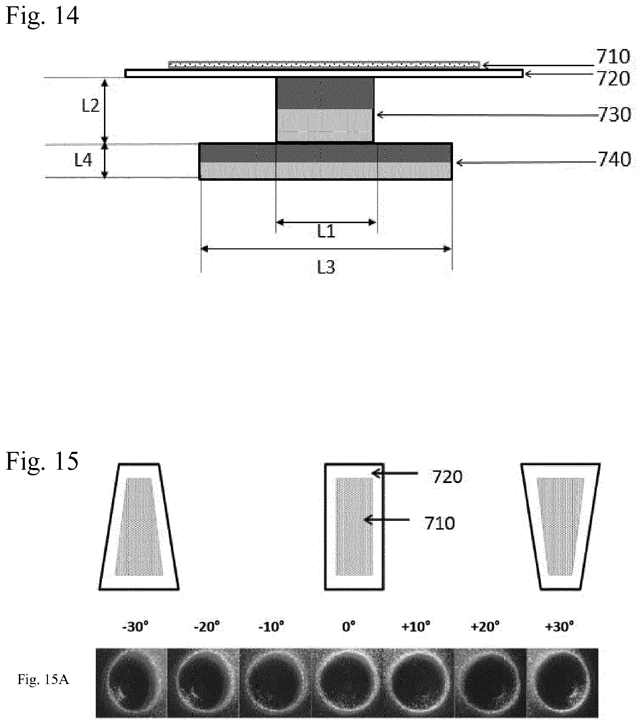

**Fig. 14** schematically illustrates a comparative magnetic assembly according to CN 104442055 B and CN 204566894U for producing an optical effect layer (OEL) (710) on a substrate (720) surface, wherein the magnetic assembly comprises a) a first magnetic-field-generating device (730), in particular a disc-shaped magnetic-field-generating device, and b) a second magnetic-field-generating device (740), in particular a disc-shaped magnetic-field-generating device.
**Fig. 15A** show pictures of OELs obtained by using the magnetic assembly illustrated in Fig. 14 as viewed at different viewing angles.

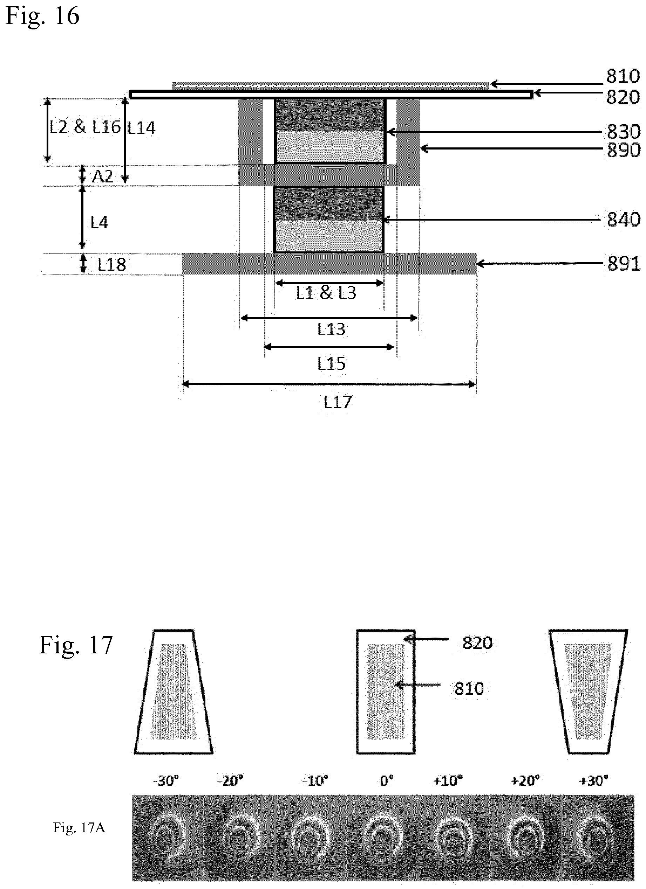

**Fig. 16** schematically illustrates a comparative magnetic assembly according to Fig. 6d of WO 2014/108303 A1 for producing an optical effect layer (OEL) (810) on a substrate (820) surface, wherein the magnetic assembly comprises a) a first magnetic-field-generating device (830), in particular a disc-shaped magnetic-field-generating device, b) a second magnetic-field-generating device (840), in particular a disc-shaped magnetic-field-generating device, c) a non-flat pole piece (890), in particular a disc-shaped pole piece having a U-shaped cross section and d) a flat pole piece (891), in particular a flat disc-shaped pole piece.
**Fig. 17A** shows pictures of OELs obtained by using the magnetic assembly illustrated in Fig. 16 as viewed at different viewing angles.

### DETAILED DESCRIPTION

### Definitions

The following definitions are to be used to interpret the meaning of the terms discussed in the description and recited in the claims.

As used herein, the indefinite article "a" indicates one as well as more than one and does not necessarily limit its referent noun to the singular.

As used herein, the term "about" means that the amount or value in question may be the specific value designated or some other value in its neighborhood. Generally, the term "about" denoting a certain value is intended to denote a range within ± 5% of the value. As one example, the phrase "about 100" denotes a range of 100 ± 5, i.e. the range from 95 to 105. Generally, when the term "about" is used, it can be expected that similar results or effects according to the invention can be obtained within a range of ±5% of the indicated value.

The term "substantially parallel" refers to deviating not more than 10° from parallel alignment and the term "substantially perpendicular" refers to deviating not more than 10° from perpendicular alignment.

As used herein, the term "and/or" means that either all or only one of the elements of said group may be present. For example, "A and/or B" shall mean "only A, or only B, or both A and B". In the case of "only A", the term also covers the possibility that B is absent, i.e. "only A, but not B".

The term "comprising" as used herein is intended to be non-exclusive and open-ended. Thus, for instance a fountain solution comprising a compound A may include other compounds besides A. However, the term "comprising" also covers, as a particular embodiment thereof, the more restrictive meanings of "consisting essentially of" and "consisting of", so that for instance "a fountain solution comprising A, B and optionally C" may also (essentially) consist of A and B, or (essentially) consist of A, B and C.

The term "coating composition" refers to any composition which is capable of forming an optical effect layer (OEL) of the present invention on a solid substrate and which can be applied preferentially but not exclusively by a printing method. The coating composition comprises at least a plurality of non-spherical magnetic or magnetizable particles and a binder.

The term "optical effect layer (OEL)" as used herein denotes a layer that comprises at least a plurality of magnetically oriented non-spherical magnetic or magnetizable particles and a binder, wherein the orientation of the non-spherical magnetic or magnetizable particles is fixed or frozen (fixed/frozen) within the binder.

The term "magnetic axis" denotes a theoretical line connecting the corresponding North and South poles of a magnet and extending through said poles. This term does not include any specific magnetic field direction.

The term "magnetic field direction" denotes the direction of the magnetic field vector along a magnetic field line pointing from the North pole at the exterior of a magnet to the South pole (see Handbook of Physics, Springer 2002, pages 463-464).

The term "curing" is used to denote a process wherein an increased viscosity of a coating composition in reaction to a stimulus to convert a material into a state, i.e. a cured, hardened or solid state, where the non-spherical magnetic or magnetizable pigment particles are fixed/frozen in their current positions and orientations and can no longer move nor rotate.

Where the present description refers to "preferred" embodiments/features, combinations of these "preferred" embodiments/features shall also be deemed as disclosed as long as this combination of "preferred" embodiments/features is technically meaningful.

As used herein, the term "at least" is meant to define one or more than one, for example one or two or three.

The term "security document" refers to a document which is usually protected against counterfeit or fraud by at least one security feature. Examples of security documents include without limitation value documents and value commercial goods.

The term "security feature" is used to denote an image, pattern or graphic element that can be used for authentication purposes.

The present invention provides methods for producing an optical effect layer (OEL) on a substrate and optical effect layers (OELs) obtained thereof, wherein said methods comprise a step i) of applying on the substrate (x20) surface the radiation curable coating composition comprising non-spherical magnetic or magnetizable pigment particles described herein, said radiation curable coating composition being in a first state.

The applying step i) described herein may be carried by a coating process such as for example roller and spray coating processes or by a printing process. Preferably, the applying step i) described herein is carried out by a printing process preferably selected from the group consisting of screen printing, rotogravure printing, flexography printing, inkjet printing and intaglio printing (also referred in the art as engraved copper plate printing and engraved steel die printing), more preferably selected from the group consisting of screen printing, rotogravure printing and flexography printing.

Subsequently to, partially simultaneously with or simultaneously with the application of the radiation curable coating composition described herein on the substrate surface described herein (step i)), at least a part of the non-spherical magnetic or magnetizable pigment particles are oriented (step ii)) by exposing the radiation curable coating composition to the magnetic field of the magnetic assembly (x00) described herein, so as to align at least part of the non-spherical magnetic or magnetizable pigment particles along the magnetic field lines generated by the magnetic assembly (x00).

Subsequently to or partially simultaneously with the step of orienting/aligning at least a part of the non-spherical magnetic or magnetizable pigment particles by applying the magnetic field described herein, the orientation of the non-spherical magnetic or magnetizable pigment particles is fixed or frozen. The radiation curable coating composition must thus noteworthy have a first state, i.e. a liquid or pasty state, wherein the radiation curable coating composition is wet or soft enough, so that the non-spherical magnetic or magnetizable pigment particles dispersed in the radiation curable coating composition are freely movable, rotatable and/or orientable upon exposure to the magnetic field, and a second cured (e.g. solid) state, wherein the non-spherical magnetic or magnetizable pigment particles are fixed or frozen in their respective positions and orientations.

Accordingly, the methods for producing the optical effect layer (OEL) on the substrate described herein comprises a step iii) of at least partially curing the radiation curable coating composition of step ii) to a second state so as to fix the non-spherical magnetic or magnetizable pigment particles in their adopted positions and orientations. The step iii) of at least partially curing the radiation curable coating composition may be carried out subsequently to or partially simultaneously with the step of orienting/aligning at least a part of the non-spherical magnetic or magnetizable pigment particles by applying the magnetic field described herein (step ii)). Preferably, the step iii) of at least partially curing the radiation curable coating composition is carried out partially simultaneously with the step of orienting/aligning at least a part of the non-spherical magnetic or magnetizable pigment particles by applying the magnetic field described herein (step ii)). By "partially simultaneously", it is meant that both steps are partly performed simultaneously, i.e. the times of performing each of the steps partially overlap. In the context described herein, when curing is performed partially simultaneously with the orientation step ii), it must be understood that curing becomes effective after the orientation so that the pigment particles orient before the complete or partial curing or hardening of the OEL.

The so-obtained optical effect layers (OELs) provide a viewer the optical impression of a moon crescent moving and rotating upon tilting the substrate comprising the optical effect layer (OEL).

The first and second states of the radiation curable coating composition are provided by using a certain type of radiation curable coating composition. For example, the components of the radiation curable coating composition other than the non-spherical magnetic or magnetizable pigment particles may take the form of an ink or radiation curable coating composition such as those which are used in security applications, e.g. for banknote printing. The aforementioned first and second states are provided by using a material that shows an increase in viscosity in reaction to an exposure to an electromagnetic radiation. That is, when the fluid binder material is cured or solidified, said binder material converts into the second state, where the non-spherical magnetic or magnetizable pigment particles are fixed in their current positions and orientations and can no longer move nor rotate within the binder material.

As known to those skilled in the art, ingredients comprised in a radiation curable coating composition to be applied onto a surface such as a substrate and the physical properties of said radiation curable coating composition must fulfil the requirements of the process used to transfer the radiation curable coating composition to the substrate surface. Consequently, the binder material comprised in the radiation curable coating composition described herein is typically chosen among those known in the art and depends on the coating or printing process used to apply the radiation curable coating composition and the chosen radiation curing process.

In the optical effect layers (OELs) described herein, the non-spherical magnetic or magnetizable pigment particles described herein are dispersed in the radiation curable coating composition comprising a cured binder material that fixes/freezes the orientation of the non-spherical magnetic or magnetizable pigment particles. The cured binder material is at least partially transparent to electromagnetic radiation of a range of wavelengths comprised between 200 nm and 2500 nm. The binder material is thus, at least in its cured or solid state (also referred to as second state herein), at least partially transparent to electromagnetic radiation of a range of wavelengths comprised between 200 nm and 2500 nm, i.e. within the wavelength range which is typically referred to as the "optical spectrum" and which comprises infrared, visible and UV portions of the electromagnetic spectrum, such that the particles contained in the binder material in its cured or solid state and their orientation-dependent reflectivity can be perceived through the binder material. Preferably, the cured binder material is at least partially transparent to electromagnetic radiation of a range of wavelengths comprised between 200 nm and 800 nm, more preferably comprised between 400 nm and 700 nm. Herein, the term "transparent" denotes that the transmission of electromagnetic radiation through a layer of 20 µm of the cured binder material as present in the OEL (not including the platelet-shaped magnetic or magnetizable pigment particles, but all other optional components of the OEL in case such components are present) is at least 50%, more preferably at least 60 %, even more preferably at least 70%, at the wavelength(s) concerned. This can be determined for example by measuring the transmittance of a test piece of the cured binder material (not including the platelet-shaped magnetic or magnetizable pigment particles) in accordance with well-established test methods, e.g. DIN 5036-3 (1979-11). If the OEL serves as a covert security feature, then typically technical means will be necessary to detect the (complete) optical effect generated by the OEL under respective illuminating conditions comprising the selected non-visible wavelength; said detection requiring that the wavelength of incident radiation is selected outside the visible range, e.g. in the near UV-range. In this case, it is preferable that the OEL comprises luminescent pigment particles that show luminescence in response to the selected wavelength outside the visible spectrum contained in the incident radiation. The infrared, visible and UV portions of the electromagnetic spectrum approximately correspond to the wavelength ranges between 700-2500 nm, 400-700 nm, and 200-400 nm respectively.

As mentioned hereabove, the radiation curable coating composition described herein depends on the coating or printing process used to apply said radiation curable coating composition and the chosen curing process. Preferably, curing of the radiation curable coating composition involves a chemical reaction which is not reversed by a simple temperature increase (e.g. up to 80°C) that may occur during a typical use of an article comprising the OEL described herein. The term "curing" or "curable" refers to processes including the chemical reaction, crosslinking or polymerization of at least one component in the applied radiation curable coating composition in such a manner that it turns into a polymeric material having a greater molecular weight than the starting substances. Radiation curing advantageously leads to an instantaneous increase in viscosity of the radiation curable coating composition after exposure to the curing irradiation, thus preventing any further movement of the pigment particles and in consequence any loss of information after the magnetic orientation step. Preferably, the curing step (step iii)) is carried out by radiation curing including UV-visible light radiation curing or by E-beam radiation curing, more preferably by UV-Vis light radiation curing.

Therefore, suitable radiation curable coating compositions for the present invention include radiation curable compositions that may be cured by UV-visible light radiation (hereafter referred as UV-Vis radiation) or by E-beam radiation (hereafter referred as EB radiation). Radiation curable compositions are known in the art and can be found in standard textbooks such as the series "Chemistry & Technology of UV & EB Formulation for Coatings, Inks & Paints", Volume IV, Formulation, by C. Lowe, G. Webster, S. Kessel and I. McDonald, 1996 by John Wiley & Sons in association with SITA Technology Limited. According to one particularly preferred embodiment of the present invention, the radiation curable coating composition described herein is a UV-Vis radiation curable coating composition.

Preferably, the UV-Vis radiation curable coating composition comprises one or more compounds selected from the group consisting of radically curable compounds and cationically curable compounds. The UV-Vis radiation curable coating composition described herein may be a hybrid system and comprise a mixture of one or more cationically curable compounds and one or more radically curable compounds. Cationically curable compounds are cured by cationic mechanisms typically including the activation by radiation of one or more photoinitiators which liberate cationic species, such as acids, which in turn initiate the curing so as to react and/or cross-link the monomers and/or oligomers to thereby cure the radiation curable coating composition. Radically curable compounds are cured by free radical mechanisms typically including the activation by radiation of one or more photoinitiators, thereby generating radicals which in turn initiate the polymerization so as to cure the radiation curable coating composition. Depending on the monomers, oligomers or prepolymers used to prepare the binder comprised in the UV-Vis radiation curable coating compositions described herein, different photoinitiators might be used. Suitable examples of free radical photoinitiators are known to those skilled in the art and include without limitation acetophenones, benzophenones, benzyldimethyl ketals, alpha-aminoketones, alpha-hydroxyketones, phosphine oxides and phosphine oxide derivatives, as well as mixtures of two or more thereof. Suitable examples of cationic photoinitiators are known to those skilled in the art and include without limitation onium salts such as organic iodonium salts (e.g. diaryl iodoinium salts), oxonium (e.g. triaryloxonium salts) and sulfonium salts (e.g. triarylsulphonium salts), as well as mixtures of two or more thereof. Other examples of useful photoinitiators can be found in standard textbooks such as "Chemistry & Technology of UV & EB Formulation for Coatings, Inks & Paints", Volume III, "Photoinitiators for Free Radical Cationic and Anionic Polymerization", 2nd edition, by J. V. Crivello & K. Dietliker, edited by G. Bradley and published in 1998 by John Wiley & Sons in association with SITA Technology Limited. It may also be advantageous to include a sensitizer in conjunction with the one or more photoinitiators in order to achieve efficient curing. Typical examples of suitable photosensitizers include without limitation isopropyl-thioxanthone (ITX), 1-chloro-2-propoxy-thioxanthone (CPTX), 2-chloro-thioxanthone (CTX) and 2,4-diethyl-thioxanthone (DETX) and mixtures of two or more thereof. The one or more photoinitiators comprised in the UV-Vis radiation curable coating compositions are preferably present in a total amount from about 0.1 wt-% to about 20 wt-%, more preferably about 1 wt-% to about 15 wt-%, the weight percents being based on the total weight of the UV-Vis radiation curable coating compositions.

The radiation curable coating composition described herein may further comprise one or more marker substances or taggants and/or one or more machine readable materials selected from the group consisting of magnetic materials (different from the platelet-shaped magnetic or magnetizable pigment particles described herein), luminescent materials, electrically conductive materials and infrared-absorbing materials. As used herein, the term "machine readable material" refers to a material which exhibits at least one distinctive property which is not perceptible by the naked eye, and which can be comprised in a layer so as to confer a way to authenticate said layer or article comprising said layer by the use of a particular equipment for its authentication.

The radiation curable coating composition described herein may further comprise one or more coloring components selected from the group consisting of organic pigment particles, inorganic pigment particles, and organic dyes, and/or one or more additives. The latter include without limitation compounds and materials that are used for adjusting physical, rheological and chemical parameters of the radiation curable coating composition such as the viscosity (e.g. solvents, thickeners and surfactants), the consistency (e.g. anti-settling agents, fillers and plasticizers), the foaming properties (e.g. antifoaming agents), the lubricating properties (waxes, oils), UV stability (photostabilizers), the adhesion properties, the antistatic properties, the storage stability (polymerization inhibitors) etc. Additives described herein may be present in the radiation curable coating composition in amounts and in forms known in the art, including so-called nano-materials where at least one of the dimensions of the additive is in the range of 1 to 1000 nm.

The radiation curable coating composition described herein comprises the non-spherical magnetic or magnetizable pigment particles described herein. Preferably, the non-spherical magnetic or magnetizable pigment particles are present in an amount from about 2 wt-% to about 40 wt-%, more preferably about 4 wt-% to about 30 wt-%, the weight percents being based on the total weight of the radiation curable coating composition comprising the binder material, the non-spherical magnetic or magnetizable pigment particles and other optional components of the radiation curable coating composition.

Non-spherical magnetic or magnetizable pigment particles described herein are defined as having, due to their non-spherical shape, non-isotropic reflectivity with respect to an incident electromagnetic radiation for which the cured or hardened binder material is at least partially transparent. As used herein, the term "non-isotropic reflectivity" denotes that the proportion of incident radiation from a first angle that is reflected by a particle into a certain (viewing) direction (a second angle) is a function of the orientation of the particles, i.e. that a change of the orientation of the particle with respect to the first angle can lead to a different magnitude of the reflection to the viewing direction. Preferably, the non-spherical magnetic or magnetizable pigment particles described herein have a non-isotropic reflectivity with respect to incident electromagnetic radiation in some parts or in the complete wavelength range of from about 200 to about 2500 nm, more preferably from about 400 to about 700 nm, such that a change of the particle's orientation results in a change of reflection by that particle into a certain direction. As known by the man skilled in the art, the magnetic or magnetizable pigment particles described herein are different from conventional pigments, said conventional pigment particles displaying the same color for all viewing angles, whereas the magnetic or magnetizable pigment particles described herein exhibit non-isotropic reflectivity as described hereabove.

The non-spherical magnetic or magnetizable pigment particles are preferably prolate or oblate ellipsoid-shaped, platelet-shaped or needle-shaped particles or a mixture of two or more thereof and more preferably platelet-shaped particles.

Suitable examples of non-spherical magnetic or magnetizable pigment particles described herein include without limitation pigment particles comprising a magnetic metal selected from the group consisting of cobalt (Co), iron (Fe), gadolinium (Gd) and nickel (Ni); magnetic alloys of iron, manganese, cobalt, nickel and mixtures of two or more thereof; magnetic oxides of chromium, manganese, cobalt, iron, nickel and mixtures of two or more thereof; and mixtures of two or more thereof. The term "magnetic" in reference to the metals, alloys and oxides is directed to ferromagnetic or ferrimagnetic metals, alloys and oxides. Magnetic oxides of chromium, manganese, cobalt, iron, nickel or a mixture of two or more thereof may be pure or mixed oxides. Examples of magnetic oxides include without limitation iron oxides such as hematite (Fe₂O₃), magnetite (Fe₃O₄), chromium dioxide (CrO₂), magnetic ferrites (MFe₂O₄), magnetic spinels (MR₂O₄), magnetic hexaferrites (MFe₁₂O₁₉), magnetic orthoferrites (RFeO₃), magnetic garnets M₃R₂(AO₄)₃, wherein M stands for two-valent metal, R stands for three-valent metal, and A stands for four-valent metal.

Examples of non-spherical magnetic or magnetizable pigment particles described herein include without limitation pigment particles comprising a magnetic layer M made from one or more of a magnetic metal such as cobalt (Co), iron (Fe), gadolinium (Gd) or nickel (Ni); and a magnetic alloy of iron, cobalt or nickel, wherein said platelet-shaped magnetic or magnetizable pigment particles may be multilayered structures comprising one or more additional layers. Preferably, the one or more additional layers are layers A independently made from one or more materials selected from the group consisting of metal fluorides such as magnesium fluoride (MgF₂), silicon oxide (SiO), silicon dioxide (SiO₂), titanium oxide (TiO₂), zinc sulphide (ZnS) and aluminum oxide (Al₂O₃), more preferably silicon dioxide (SiO₂); or layers B independently made from one or more materials selected from the group consisting of metals and metal alloys, preferably selected from the group consisting of reflective metals and reflective metal alloys, and more preferably selected from the group consisting of aluminum (Al), chromium (Cr), and nickel (Ni), and still more preferably aluminum (Al); or a combination of one or more layers A such as those described hereabove and one or more layers B such as those described hereabove. Typical examples of the platelet-shaped magnetic or magnetizable pigment particles being multilayered structures described hereabove include without limitation A/M multilayer structures, A/M/A multilayer structures, A/M/B multilayer structures, A/B/M/A multilayer structures, A/B/M/B multilayer structures, A/B/M/B/A multilayer structures, B/M multilayer structures, B/M/B multilayer structures, B/A/M/A multilayer structures, B/A/M/B multilayer structures, B/A/M/B/A/multilayer structures, wherein the layers A, the magnetic layers M and the layers B are chosen from those described hereabove.

At least part of the non-spherical magnetic or magnetizable pigment particles described herein may be constituted by non-spherical optically variable magnetic or magnetizable pigment particles and/or non-spherical magnetic or magnetizable pigment particles having no optically variable properties. Preferably, at least a part of the non-spherical magnetic or magnetizable pigment particles described herein is constituted by non-spherical optically variable magnetic or magnetizable pigment particles. In addition to the overt security provided by the colorshifting property of non-spherical optically variable magnetic or magnetizable pigment particles, which allows easily detecting, recognizing and/or discriminating an article or security document carrying an ink, radiation curable coating composition, coating or layer comprising the non-spherical optically variable magnetic or magnetizable pigment particles described herein from their possible counterfeits using the unaided human senses, the optical properties of the platelet-shaped optically variable magnetic or magnetizable pigment particles may also be used as a machine readable tool for the recognition of the OEL. Thus, the optical properties of the non-spherical optically variable magnetic or magnetizable pigment particles may simultaneously be used as a covert or semi-covert security feature in an authentication process wherein the optical (e.g. spectral) properties of the pigment particles are analyzed. The use of non-spherical optically variable magnetic or magnetizable pigment particles in radiation curable coating compositions for producing an OEL enhances the significance of the OEL as a security feature in security document applications, because such materials (i.e. non-spherical optically variable magnetic or magnetizable pigment particles) are reserved to the security document printing industry and are not commercially available to the public.

Moreover, and due to their magnetic characteristics, the non-spherical magnetic or magnetizable pigment particles described herein are machine readable, and therefore coatings or layers made of the radiation curable coating compositions described herein and comprising those pigment particles may be detected for example with specific magnetic detectors. Radiation curable coating compositions comprising the non-spherical magnetic or magnetizable pigment particles described herein may therefore be used as a covert or semi-covert security element (authentication tool) for security documents.

As mentioned above, preferably at least a part of the non-spherical magnetic or magnetizable pigment particles is constituted by non-spherical optically variable magnetic or magnetizable pigment particles. These can more preferably be selected from the group consisting of non-spherical magnetic thin-film interference pigment particles, non-spherical magnetic cholesteric liquid crystal pigment particles, non-spherical interference coated pigment particles comprising a magnetic material and mixtures of two or more thereof.

Magnetic thin film interference pigment particles are known to those skilled in the art and are disclosed e.g. in US 4,838,648; WO 2002/073250 A2; EP 0 686 675 B1; WO 2003/000801 A2; US 6,838,166; WO 2007/131833 A1; EP 2 402 401 A1 and in the documents cited therein. Preferably, the magnetic thin film interference pigment particles comprise pigment particles having a five-layer Fabry-Perot multilayer structure and/or pigment particles having a six-layer Fabry-Perot multilayer structure and/or pigment particles having a seven-layer Fabry-Perot multilayer structure.

Preferred five-layer Fabry-Perot multilayer structures consist of absorber/dielectric/reflector/dielectric/absorber multilayer structures wherein the reflector and/or the absorber is also a magnetic layer, preferably the reflector and/or the absorber is a magnetic layer comprising nickel, iron and/or cobalt, and/or a magnetic alloy comprising nickel, iron and/or cobalt and/or a magnetic oxide comprising nickel (Ni), iron (Fe) and/or cobalt (Co).

Preferred six-layer Fabry-Perot multilayer structures consist of absorber/dielectric/reflector/magnetic/dielectric/absorber multilayer structures.

Preferred seven-layer Fabry Perot multilayer structures consist of absorber/dielectric/reflector/magnetic/reflector/dielectric/absorber multilayer structures such as disclosed in US 4,838,648.

Preferably, the reflector layers described herein are independently made from one or more materials selected from the group consisting of metals and metal alloys, preferably selected from the group consisting of reflective metals and reflective metal alloys, more preferably selected from the group consisting of aluminum (Al), silver (Ag), copper (Cu), gold (Au), platinum (Pt), tin (Sn), titanium (Ti), palladium (Pd), rhodium (Rh), niobium (Nb), chromium (Cr), nickel (Ni), and alloys thereof, even more preferably selected from the group consisting of aluminum (Al), chromium (Cr), nickel (Ni) and alloys thereof, and still more preferably aluminum (Al). Preferably, the dielectric layers are independently made from one or more materials selected from the group consisting of metal fluorides such as magnesium fluoride (MgF₂), aluminum fluoride (AlF₃), cerium fluoride (CeF₃), lanthanum fluoride (LaF₃), sodium aluminum fluorides (e.g. Na₃AlF₆), neodymium fluoride (NdF₃), samarium fluoride (SmF₃), barium fluoride (BaF₂), calcium fluoride (CaF₂), lithium fluoride (LiF), and metal oxides such as silicon oxide (SiO), silicon dioxide (SiO₂), titanium oxide (TiO₂), aluminum oxide (Al₂O₃), more preferably selected from the group consisting of magnesium fluoride (MgF₂) and silicon dioxide (SiO₂) and still more preferably magnesium fluoride (MgF₂). Preferably, the absorber layers are independently made from one or more materials selected from the group consisting of aluminum (Al), silver (Ag), copper (Cu), palladium (Pd), platinum (Pt), titanium (Ti), vanadium (V), iron (Fe) tin (Sn), tungsten (W), molybdenum (Mo), rhodium (Rh), Niobium (Nb), chromium (Cr), nickel (Ni), metal oxides thereof, metal sulfides thereof, metal carbides thereof, and metal alloys thereof, more preferably selected from the group consisting of chromium (Cr), nickel (Ni), metal oxides thereof, and metal alloys thereof, and still more preferably selected from the group consisting of chromium (Cr), nickel (Ni), and metal alloys thereof. Preferably, the magnetic layer comprises nickel (Ni), iron (Fe) and/or cobalt (Co); and/or a magnetic alloy comprising nickel (Ni), iron (Fe) and/or cobalt (Co); and/or a magnetic oxide comprising nickel (Ni), iron (Fe) and/or cobalt (Co). When magnetic thin film interference pigment particles comprising a seven-layer Fabry-Perot structure are preferred, it is particularly preferred that the magnetic thin film interference pigment particles comprise a seven-layer Fabry-Perot absorber/dielectric/reflector/magnetic/reflector/dielectric/absorber multilayer structure consisting of a Cr/MgF₂/Al/M/Al/MgF₂/Cr multilayer structure, wherein M a magnetic layer comprising nickel (Ni), iron (Fe) and/or cobalt (Co); and/or a magnetic alloy comprising nickel (Ni), iron (Fe) and/or cobalt (Co); and/or a magnetic oxide comprising nickel (Ni), iron (Fe) and/or cobalt (Co).

The magnetic thin film interference pigment particles described herein may be multilayer pigment particles being considered as safe for human health and the environment and being based for example on five-layer Fabry-Perot multilayer structures, six-layer Fabry-Perot multilayer structures and seven-layer Fabry-Perot multilayer structures, wherein said pigment particles include one or more magnetic layers comprising a magnetic alloy having a substantially nickel-free composition including about 40 wt-% to about 90 wt-% iron, about 10 wt-% to about 50 wt-% chromium and about 0 wt-% to about 30 wt-% aluminum. Typical examples of multilayer pigment particles being considered as safe for human health and the environment can be found in EP 2 402 401 A1.

Magnetic thin film interference pigment particles described herein are typically manufactured by a conventional deposition technique for the different required layers onto a web. After deposition of the desired number of layers, e.g. by physical vapor deposition (PVD), chemical vapor deposition (CVD) or electrolytic deposition, the stack of layers is removed from the web, either by dissolving a release layer in a suitable solvent, or by stripping the material from the web. The so-obtained material is then broken down to platelet-shaped pigment particles which have to be further processed by grinding, milling (such as for example jet milling processes) or any suitable method so as to obtain pigment particles of the required size. The resulting product consists of flat platelet-shaped pigment particles with broken edges, irregular shapes and different aspect ratios. Further information on the preparation of suitable platelet-shaped magnetic thin film interference pigment particles can be found e.g. in EP 1 710 756 A1 and EP 1 666 546 A1.

Suitable magnetic cholesteric liquid crystal pigment particles exhibiting optically variable characteristics include without limitation magnetic monolayered cholesteric liquid crystal pigment particles and magnetic multilayered cholesteric liquid crystal pigment particles. Such pigment particles are disclosed for example in WO 2006/063926 A1, US 6,582,781 and US 6,531,221. WO 2006/063926 A1 discloses monolayers and pigment particles obtained therefrom with high brilliance and colorshifting properties with additional particular properties such as magnetizability. The disclosed monolayers and pigment particles, which are obtained therefrom by comminuting said monolayers, include a three-dimensionally crosslinked cholesteric liquid crystal mixture and magnetic nanoparticles. US 6,582,781 and US 6,410,130 disclose cholesteric multilayer pigment particles which comprise the sequence A¹/B/A², wherein A¹ and A² may be identical or different and each comprises at least one cholesteric layer, and B is an interlayer absorbing all or some of the light transmitted by the layers A¹ and A² and imparting magnetic properties to said interlayer. US 6,531,221 discloses platelet-shaped cholesteric multilayer pigment particles which comprise the sequence A/B and optionally C, wherein A and C are absorbing layers comprising pigment particles imparting magnetic properties, and B is a cholesteric layer.

Suitable interference coated pigments comprising one or more magnetic materials include without limitation structures consisting of a substrate selected from the group consisting of a core coated with one or more layers, wherein at least one of the core or the one or more layers have magnetic properties. For example, suitable interference coated pigments comprise a core made of a magnetic material such as those described hereabove, said core being coated with one or more layers made of one or more metal oxides, or they have a structure consisting of a core made of synthetic or natural micas, layered silicates (e.g. talc, kaolin and sericite), glasses (e.g. borosilicates), silicon dioxides (SiO₂), aluminum oxides (Al₂O₃), titanium oxides (TiO₂), graphites and mixtures of two or more thereof. Furthermore, one or more additional layers such as coloring layers may be present.

The non-spherical magnetic or magnetizable pigment particles described herein may be surface treated so at to protect them against any deterioration that may occur in the radiation curable coating composition and/or to facilitate their incorporation in the radiation curable coating composition; typically corrosion inhibitor materials and/or wetting agents may be used.

The process for producing the optical effect layers (OEL) (x10) described herein on the substrate (x20) described herein comprises a step ii) of exposing the radiation curable coating composition to the magnetic field of the magnetic assembly (x00) described herein. Also described herein are magnetic assemblies (x00) and processes using said magnetic assemblies (x00) for producing an OEL (x10) such as those described herein on the substrate (x20) described herein, said OEL comprising the non-spherical magnetic or magnetizable pigment particles being oriented in the cured radiation curable coating composition such as described herein.

The magnetic assembly (x00) comprises a) the first magnetic-field generating device (x30) having the length L1 described herein, b) the second magnetic-field generating device (x40) having the length L3 described herein, and c) the flat pole piece (x50) having the length L5 described herein.

According to one embodiment, the magnetic assembly (x00) described herein is disposed or encased in a holder (x01) mounted on a transferring device, wherein said transferring device is a rotating magnetic cylinder or a magnetic orienting printing unit. Preferably, the magnetic assembly (x00) described herein is disposed or encased in the holder(x01) described herein, wherein said holder (x01) is mounted on the rotating magnetic cylinder, in particular mounted on circumferential grooves or transverse grooves of the rotating magnetic cylinder.

As illustrated in Fig. 2, the magnetic assembly (x00) for producing the optical effect layer described herein is preferably disposed or encased in the holder (x01) described herein, wherein said holder (x01) comprises a domed-shaped lid (x02) (i.e. a lid having a curved surface) to protect the magnetic assembly (x00) from contamination and mechanical damage and to provide a smooth surface for supporting a substrate (x20) carrying the OEL (x10). The holder (101) and the domed-shaped lid (102) have a length and a width L21, a thickness L19 at the center of the domed-shaped lid (102) and a thickness L20 at the edge of the domed-shaped lid (102). The top surface of the domed-shaped lid (102) is a curved surface whose curvature is that of a circle having a radius (L-R). The external top surface of the domed-shaped lid (x02) preferably seamlessly conforms to the external surface of the transferring device described herein, preferably to the external surface of the rotating magnetic cylinder described herein, wherein the magnetic assembly (x00) described herein is disposed or encased. The domed-shaped lid (x02) serves as a separating element between the magnetic assembly (x00) and the substrate (x20) carrying the OEL (x10). As illustrated in Fig. 2, the domed-shaped lid (102) may further comprise a recess to secure the first magnetic-field generating device (130) in an alignment with the second magnetic-field generating device (140) and the flat pole piece (150).

The holder (x01) described herein comprises a bottom locking (x03) to protect the magnetic assembly (x00) from contamination and mechanical damage. The bottom locking (103) has a length and a width L23 and a thickness L24. The bottom locking (x03) may be inserted in the bottom surface of the domed-shaped lid (x02) so as to be flush with the bottom surface of the domed-shaped lid (x02).

The domed-shaped lid (x02) and the bottom locking (x03) of the holder (x01) described herein are independently made of one or more non-magnetic materials selected from the same group of low conducting materials, non-conducting materials and mixtures thereof such as the non-magnetic materials described herein for the non-magnetic plate (x60).

The holder (x01) described herein may further comprise a non-magnetic wedge (x04) for supporting the magnetic assembly (x00) and varying the distance A1 between the top surface of the magnetic assembly (x00) and the substrate (x20) carrying the OEL (110). The non-magnetic wedge (104) a length L25 and a thickness L24. The non-magnetic wedge (x04) described herein is made of one or more non-magnetic materials selected from the same group of low conducting materials, non-conducting materials and mixtures thereof such as the non-magnetic materials described herein for the non-magnetic plate (x60). Advantageously, the domed-shaped lid (x02) and the non-magnetic wedge (x04) provide an appropriate distance between the magnetic assembly (x00) and the substrate (x20) in contact with the domed-shaped lid (x02).

The holder (x01) described herein may further comprise a non-magnetic matrix (x41) to secure the second magnetic-field generating device (x40) in an alignment with the first magnetic-field generating device (x30) and the flat pole piece (x50). The non-magnetic matrix (x41) typically comprises a void suitable for receiving the second magnetic-field-generating device (x40), said void preferably having the same shape and the same dimensions as the second magnetic-field-generating device (x40). The non-magnetic matrix (x41) described herein is made of one or more non-magnetic materials selected from the same group of low conducting materials, non-conducting materials and mixtures thereof such as the non-magnetic materials described herein for the non-magnetic plate (x60).

Each of the first magnetic-field generating device (x30) and the second magnetic-field generating device (x40) has its North-South magnetic axis substantially perpendicular to the substrate (x20) surface and both of said first magnetic-field generating device (x30) and said second magnetic-field generating device (x40) have the same magnetic field direction, i.e. either both of said first magnetic-field generating device (x30) and said second magnetic-field generating device (x40) have their North Pole pointing towards the substrate (x20) (as shown in Fig. 1-6) or both have their South Pole pointing towards the substrate (x20) surface.

The first magnetic-field generating device (x30) is disposed on top of the second magnetic-field generating device (x40) at a distance A2 being different from zero (i.e. the first and second magnetic magnetic-field generating device (x30, x40) are not in direct contact) since at least the flat pole piece (x50) described herein is present between the first magnetic-field generating device (x30) and the second magnetic-field generating device (x40). As shown in Fig. 1-6, the first magnetic-field generating device (x30) faces the substrate (x20) surface and the second magnetic-field generating device (x40) faces the environment.

Since the flat pole piece (x50) is disposed between the first magnetic-field generating device (x30) and the second magnetic-field generating device (x40), said first magnetic-field generating device (x30) is not in direct contact with said second magnetic-field generating device (x40). The distance A2 between the lower surface of the first magnetic-field generating device (x30) and the upper surface of the second magnetic-field generating device (x40) is preferably between about 1 and about 15 mm and more preferably between about 1 and about 10 mm.

The distance (A1) between the upmost surface of the first magnetic-field generating device (x30) and the lower surface of the substrate (x20) facing the magnetic assembly (x00) described herein is preferably between about 0 and about 5 mm, more preferably between about 0 and about 2.5 mm and still more preferably between about 0 and about 1 mm.

The first magnetic-field generating device (x30) and the second magnetic-field generating device (x40) may have any shape or may have a different shape. The second magnetic-field generating device (x40) may be a loop-shaped magnetic field generating device, such as a ring-shaped magnetic field generating device, or a solid magnetic field generating device (i.e. magnetic field generating device which do not comprise a central area lacking the material of said magnetic field generating device). Preferably, the magnetic-field generating device (x30) and the second magnetic-field generating device (x40) independently have the shape of a disc (referred therein as "disc-shaped" magnetic-field generating device) or have the shape of a parallelepiped, preferably the shape of a square (referred therein as "square-shaped" magnetic-field generating device). Preferably, the first magnetic-field generating device (x30) and/or, preferably and, the second magnetic-field generating device (x40) are disc-shaped magnetic-field generating devices or square-shaped magnetic-field generating devices. According to a preferred embodiment, the magnetic-field generating device (x30) and the second magnetic-field generating device (x40) are disc-shaped magnetic-field generating devices. According to another preferred embodiment, the magnetic-field generating device (x30) and the second magnetic-field generating device (x40) are square-shaped magnetic-field generating devices. For embodiments comprising disc-shaped magnetic-field generating devices (x30, x40), the length L1 and L3 described herein refer and correspond to the diameter of said disc-shaped devices. For embodiments comprising square-shaped magnetic-field generating devices (x30, x40), the length L1 and L3 described herein refer and correspond to the width of said square-shaped devices.

The first magnetic-field generating device (x30) has a length L1 (a diameter L1 in case of a disc-shaped magnetic-field generating device or a width L1 in case of a square-shaped magnetic-field generating device) smaller than the length L3 (diameter L3 in case of a disc-shaped magnetic-field generating device or width L3 in case of a square-shaped magnetic-field generating device) of the second magnetic-field generating device (x40).

The first magnetic-field generating device (x30) described herein may be disposed symmetrically or non-symmetrically with the second magnetic-field generating device (x40) described herein. Preferably and for reasons of mechanical balance, the first magnetic-field generating device (x30) described herein is disposed symmetrically with the second magnetic-field generating device (x40) described herein or in other words, the first and second magnetic-field generating devices (x30, x40) described herein are centrally aligned.

According to a preferred embodiment and for reasons of mechanical balance, the magnetic assembly (x00) described herein comprises a first magnetic-field generating device (x30) being a disc-shaped magnetic-field generating device and a second magnetic-field generating device (x40) being a disc-shaped magnetic-field generating device, wherein the first disc-shaped magnetic-field generating device (x30) is symmetrically disposed on top of the second disc-shaped magnetic-field generating device (x40), i.e. the origin or the center (i.e. the point where the diameters intersect) of the first disc-shaped magnetic-field generating device (x30) is aligned with the origin of the second disc-shaped magnetic-field generating device (x40) (see Fig. 1-6).

According to another preferred embodiment and for reasons of mechanical balance, the magnetic assembly (x00) described herein comprises a first magnetic-field generating device (x30) being a square-shaped magnetic-field generating device and a second magnetic-field generating device (x40) being a square-shaped magnetic-field generating device, wherein the first square -shaped magnetic-field generating device (x30) is symmetrically disposed on top of the second square-shaped magnetic-field generating device (x40), i.e. the origin or the center (i.e. the point where the diagonals intersect) of the first square-shaped magnetic-field generating device (x30) is aligned with the origin of the second square-shaped magnetic-field generating device (x40) (see Fig. 1).

The first magnetic-field generating device (x30) and the second magnetic-field generating device (x40) are preferably independently made of high-coercivity materials (also referred as strong magnetic materials). Suitable high-coercivity materials are materials having a maximum value of energy product (BH)ₘₐₓ of at least 20 kJ/m³, preferably at least 50 kJ/m³, more preferably at least 100 kJ/m³, even more preferably at least 200 kJ/m³. They are preferably made of one or more sintered or polymer bonded magnetic materials selected from the group consisting of Alnicos such as for example Alnico 5 (R1-1-1), Alnico 5 DG (R1-1-2), Alnico 5-7 (R1-1-3), Alnico 6 (R1-1-4), Alnico 8 (R1-1-5), Alnico 8 HC (R1-1-7) and Alnico 9 (R1-1-6); hexaferrites of formula MFe₁₂0₁₉, (e.g. strontium hexaferrite (SrO*6Fe₂0₃) or barium hexaferrites (BaO*6Fe₂0₃)), hard ferrites of the formula MFe₂0₄ (e.g. as cobalt ferrite (CoFe₂0₄) or magnetite (Fe₃O₄)), wherein M is a bivalent metal ion), ceramic 8 (SI-1-5); rare earth magnetic materials selected from the group comprising RECo₅ (with RE = Sm or Pr), RE₂TM₁₇ (with RE = Sm, TM = Fe, Cu, Co, Zr, Hf), RE₂TM₁₄B (with RE = Nd, Pr, Dy, TM = Fe, Co); anisotropic alloys of Fe Cr Co; materials selected from the group of PtCo, MnAIC, RE Cobalt 5/16, RE Cobalt 14. Preferably, the high-coercivity materials of the first magnetic-field generating device (x30) and the second magnetic-field generating device (x40) are selected from the groups consisting of rare earth magnetic materials, and more preferably from the group consisting of Nd₂Fe₁₄B and SmCo₅. Particularly preferred are easily workable permanent-magnetic composite materials that comprise a permanent-magnetic filler, such as strontium-hexaferrite (SrFe₁₂O₁₉) or neodymium-iron-boron (Nd₂Fe₁₄B) powder, in a plastic- or rubber-type matrix.

The magnetic assembly (x00) described herein comprises c) the flat pole piece (x50) described herein. By "flat", it is meant that said pole piece does not comprise any protrusions or projections extending outside the surface of said pole piece, i.e. lacks any protrusions or projections extending outside the surface of said pole piece. Fig. 1-6 illustrate magnetic assemblies (x00) comprising a flat pole piece (x50) whereas the comparative Fig. 8 illustrates a magnetic assembly comprising a non-flat pole piece (x90), in particular pole pieces comprising an indentation and a U-shaped cross-section and a flat pole piece (x91).

The flat pole piece (x50) described herein is disposed between the first magnetic-field generating device (x30) and the second magnetic-field generating device (x40) or, in other words, the first magnetic-field generating device (x30) is disposed on top of the flat pole piece (x50) and the second magnetic-field generating device (x40) is disposed below the flat pole piece (x50). The flat pole piece (x50) may be in direct contact with the first and second magnetic-field generating device (x30, x40) or may be separated from the first and second magnetic-field generating device (x30, x40).

A pole piece denotes a structure composed of a material having high magnetic permeability, preferably a permeability between about 2 and about 1,000,000 N·A⁻² (Newton per square Ampere), more preferably between about 5 and about 50,000 N·A⁻² and still more preferably between about 10 and about 10,000 N·A⁻². Pole piece serve to direct the magnetic field produced by magnets. The flat pole piece (x50) described herein may be made from iron or from a plastic material in which magnetizable particles are dispersed. Preferably the flat pole piece (x50) described herein is made of iron.

The flat pole piece (x50) is a solid-shaped flat pole piece and more preferably a flat disc-shaped pole piece or a flat square-shaped pole piece.

The flat pole piece (x50) described herein has a length L5, wherein said length L5 is larger than the length L3 of the second magnetic-field generating device (x40). For embodiments comprising a flat disc-shaped pole piece (x50), the length L5 described herein refers and corresponds to the diameter of said pole piece (x50). For embodiments comprising a flat square-shaped pole piece (x50), the length L5 described herein refers and corresponds to the width of said pole piece.

The flat pole piece (x50) may be disposed symmetrically or non-symmetrically with the first magnetic-field generating device (x30) described herein and the second magnetic-field generating device (x40) described herein. Preferably, and for reasons of mechanical balance and design purpose, the flat pole piece (x50) is disposed symmetrically with the first magnetic-field generating device (x30) described herein and the second magnetic-field generating device (x40) described herein.

According to one embodiment shown in Figs. 1 and 2 and 3A-3D, the magnetic assembly (100) described herein comprises a) the first magnetic-field generating device (130), in particular the first disc-shaped magnetic-field generating device (130), described herein, b) the second magnetic-field generating device (140), preferably the second disc-shaped magnetic-field generating device (140), described herein and c) the flat pole piece (150), preferably the flat square-shaped pole piece (150), described herein; wherein the first and second disc-shaped magnetic-field generating device (130, 140) have their North-South magnetic axis substantially perpendicular to the substrate (120) surface and have their North Pole pointing towards the substrate (120); wherein the diameter (L1) of the first disc-shaped magnetic-field generating device (130) is smaller than the diameter (L3) of the second disc-shaped magnetic-field generating device (140) and the diameter (L3) of the second disc-shaped magnetic-field generating device (140) is smaller than the diameter (L5) of the flat square-shaped pole piece (150); wherein the first disc-shaped magnetic-field generating device (130) is in direct contact and is disposed on top of the flat square-shaped pole piece (150); wherein the square-shaped pole piece (150) is in direct contact and is disposed on top of the second disc-shaped magnetic-field generating device (140); and wherein the origin (i.e. the point where the diameters intersect) of the first disc-shaped magnetic-field generating device (130), of the second disc-shaped magnetic-field generating device (140) and of the flat square-shaped pole piece (150) are aligned. Preferably, the distance (A1) between the upmost surface of the first disc-shaped magnetic-field generating device (130) and the lower surface of the substrate (120) facing the magnetic assembly (100) described herein is preferably between about 0 and about 5 mm, more preferably between about 0 and about 2.5 mm and still more preferably between about 0 and about 1 mm.

The magnetic assembly (x00) described herein may further comprise a non-magnetic plate (x60).

The non-magnetic plate (x60) described herein acts as a spacer between the first magnetic-field generating device (x30) and the second magnetic-field generating device (x40). The non-magnetic plate (x60) described herein is disposed between the first magnetic-field generating device (x30) and the second magnetic-field generating device (x40). The non-magnetic plate (x60) described herein may be disposed below (see for example Fig. 4) or may be disposed on top of (see for example Fig. 3) the flat pole piece (x50).

The non-magnetic plate (x60) described herein is independently made of one or more non-magnetic materials. The non-magnetic materials are preferably selected from the group consisting of low conducting materials, non-conducting materials and mixtures thereof, such as for example engineering plastics and polymers, aluminum, aluminum alloys, titanium, titanium alloys and austenitic steels (i.e. non-magnetic steels). Engineering plastics and polymers include without limitation polyaryletherketones (PAEK) and its derivatives polyetheretherketones (PEEK), poletherketoneketones (PEKK), polyetheretherketoneketones (PEEKK) and polyetherketoneetherketoneketone (PEKEKK); polyacetals, polyamides, polyesters, polyethers, copolyetheresters, polyimides, polyetherimides, high-density polyethylene (HDPE), ultra-high molecular weight polyethylene (UHMWPE), polybutylene terephthalate (PBT), polypropylene, acrylonitrile butadiene styrene (ABS) copolymer, fluorinated and perfluorinated polyethylenes, polystyrenes, polycarbonates, polyphenylenesulfide (PPS) and liquid crystal polymers. Preferred materials are PEEK (polyetheretherketone), POM (polyoxymethylene), PTFE (polytetrafluoroethylene), Nylon^{®} (polyamide) and PPS.

The non-magnetic plate (x60) described herein may have any shape. Preferably, the non-magnetic plate (x60) described herein is a disc-shaped non-magnetic plate or a square-shaped non-magnetic plate, more preferably a square-shaped non-magnetic plate.

The non-magnetic plate (x60) described herein has a length L7. For embodiments comprising a disc-shaped non-magnetic plate (x60), the length L7 described herein refers and corresponds to the diameter of said non-magnetic plate. For embodiments comprising a square-shaped non-magnetic plate (x60), the length L7 described herein refers and corresponds to the width of said non-magnetic plate.

According to a preferred embodiment and for reasons of mechanical balance, the length L7 of the non-magnetic plate (x60) (diameter L7 in case of disc-shaped non-magnetic plate; width L7 in case of a square-shaped non-magnetic plate) is the same as the length L5 of the flat pole piece (x50).

The non-magnetic plate (x60) may be disposed symmetrically or non-symmetrically with the first magnetic-field generating device (x30) described herein, the second magnetic-field generating device (x40) and the flat pole piece (x50) described herein. Preferably and for reasons of mechanical balance, the non-magnetic plate (x60) is disposed symmetrically with the first magnetic-field generating device (x30) described herein, the second magnetic-field generating device (x40) and the flat pole piece (x50) described herein.

According to one embodiment shown in Fig. 4, the magnetic assembly (200) described herein comprises a) the first magnetic-field generating device (230), in particular the first disc-shaped magnetic-field generating device (230), described herein, b) the second magnetic-field generating device (240), preferably the second disc-shaped magnetic-field generating device (240), described herein, c) the flat pole piece (250), preferably the flat square-shaped pole piece or flat disc-shaped pole piece (250), described herein, and d) the non-magnetic plate (260), preferably the square-shaped non-magnetic plate (260), described herein; wherein the first and second disc-shaped magnetic-field generating device (230, 240) have their North-South magnetic axis substantially perpendicular to the substrate (220) surface and have their North pointing towards the substrate (220); wherein the diameter (L1) of the first disc-shaped magnetic-field generating device (230) is smaller than the diameter (L3) of the second disc-shaped magnetic-field generating device (230), the diameter (L3) of the second disc-shaped magnetic-field generating device (230) is smaller than the width (L5) of the flat square-shaped pole piece (250) or smaller than the diameter (L5) of the disc-shaped pole piece (250), and the width (L5) of the flat square-shaped pole piece (250) or the diameter (L5) of the of the disc-shaped pole piece (250) is the same as the width (L7) of the square-shaped non-magnetic plate (260); wherein the first disc-shaped magnetic-field generating device (230) is in direct contact and is disposed on top of the flat square-shaped pole piece (250) or flat disc-shaped pole piece (250); wherein the flat disc-shaped pole piece or flat square-shaped pole piece (250) is in direct contact and is disposed on top of the square-shaped non-magnetic plate (260); wherein the square-shaped non-magnetic plate (260) is in direct contact and is disposed on top of the second disc-shaped magnetic-field generating device (240); and wherein the origin of the first disc-shaped magnetic-field generating device (230), of the second disc-shaped magnetic-field generating device (240), of the square-shaped flat pole piece (250) or disc-shaped pole piece (250) and of the square-shaped non-magnetic plate (260) are aligned. Preferably, the distance (A1) between the upmost surface of the first disc-shaped magnetic-field generating device (230) and the lower surface of the substrate (220) facing the magnetic assembly (200) described herein is preferably between about 0 and about 5 mm, more preferably between about 0 and about 2.5 mm and still more preferably between about 0 and about 1 mm.

According to another embodiment shown in Fig. 6, the magnetic assembly (300) described herein comprises a) the first magnetic-field generating device (330), in particular the first disc-shaped magnetic-field generating device (330), described herein, b) the second magnetic-field generating device (340), preferably the second disc-shaped magnetic-field generating device (340), described herein, c) the flat pole piece (350), preferably the flat square-shaped pole piece (350), described herein, and d) the non-magnetic plate (360), preferably the non-magnetic square-shaped plate (360), described herein; wherein the first and second disc-shaped magnetic-field generating device (330, 340) have their North-South magnetic axis substantially perpendicular to the substrate (320) surface and have their North Pole pointing towards the substrate (320); wherein the diameter (L1) of the first disc-shaped magnetic-field generating device (330) is smaller than the diameter (L3) of the second disc-shaped magnetic-field generating device (340), the diameter (L3) of the second disc-shaped magnetic-field generating device (340) is smaller than the width (L5) of the flat square-shaped pole piece (350), and the width (L5) of the flat square-shaped pole piece (350) is the same as the width (L7) of the non-magnetic square-shaped plate (360); wherein the first disc-shaped magnetic-field generating device (330) is in direct contact and is disposed on top of the square-shaped non-magnetic plate (360); wherein the square-shaped non-magnetic plate (360) is in direct contact and is disposed on top of the flat square-shaped pole piece (350); wherein the flat square-shaped pole piece (350) is in direct contact and is disposed on top of the second disc-shaped magnetic-field generating device (340); and wherein the origin of the first disc-shaped magnetic-field generating device (330), of the second disc-shaped magnetic-field generating device (340), of the square-shaped flat pole piece (350) and of the square-shaped non-magnetic plate (360) are aligned. Preferably, the distance (A1) between the upmost surface of the first disc-shaped magnetic-field generating device (330) and the lower surface of the substrate (320) facing the magnetic assembly (300) described herein is preferably between about 0 and about 5 mm, more preferably between about 0 and about 2.5 mm and still more preferably between about 0 and about 1 mm.

The magnetic assembly (x00) described herein may further comprise a second flat pole piece (x70). The second flat pole piece (x70) described herein is disposed below the second magnetic-field generating device (x40) and thus faces the environment (see Fig. 8 and 10).

The second flat pole piece (x70) is a solid-shaped flat pole pieces and more preferably a flat disc-shaped pole piece or a flat square-shaped and still more preferably has the same shape as the flat pole piece (x50).

The second flat pole piece (x70) is a structure composed of a material having high magnetic permeability such as described herein for the flat pole piece (x50). Preferably the second flat pole piece (x70) described herein is made of iron.

The second flat pole piece (x70) described herein has a length L9. For embodiments comprising a second flat disc-shaped pole piece (x70), the length L9 described herein refers and corresponds to the diameter of said second flat pole piece (x70). For embodiments comprising a second flat square-shaped pole piece (x70), the length L9 described herein refers and corresponds to the width of said second flat pole piece. According to a preferred embodiment, and for reasons of mechanical balance and for design purpose, the length L9 of the second flat square-shaped pole piece (x70) is the same as the length L5 of the flat pole piece (x50).

The second flat pole piece (x70) may be disposed symmetrically or non-symmetrically with the first magnetic-field generating device (x30) described herein, the second magnetic-field generating device (x40), the flat pole piece (x50) described herein and the non-magnetic plate (x60) described herein, when present. Preferably and for reasons of mechanical balance, the second flat pole piece (x70) is disposed symmetrically with the first magnetic-field generating device (x30) described herein, the second magnetic-field generating device (x40), the flat pole piece (x50) described herein and the non-magnetic plate (x60) described herein, when present.

According to one embodiment shown in Fig. 8, the magnetic assembly (400) described herein comprises a) the first magnetic-field generating device (430), in particular the first disc-shaped magnetic-field generating device (430), described herein, b) the second magnetic-field generating device (440), preferably the second disc-shaped magnetic-field generating device (440), described herein, c) the flat pole piece (450), preferably the flat square-shaped pole piece (450), described herein, and d) the second flat pole piece (470), preferably the second flat square-shaped pole piece (470), described herein; wherein the first and second disc-shaped magnetic-field generating device (430, 440) have their North-South magnetic axis substantially perpendicular to the substrate (420) surface and have their North Pole pointing towards the substrate (420); wherein the diameter (L1) of the first disc-shaped magnetic-field generating device (430) is smaller than the diameter (L3) of the second disc-shaped magnetic-field generating device (440), the diameter (L3) of the second disc-shaped magnetic-field generating device (440) is smaller than the width (L5) of the flat square -shaped pole piece (450), and the width (L5) of the flat square-shaped pole piece (450) is the same as the width (L7) of the second flat square-shaped pole piece (470); wherein the first disc-shaped magnetic-field generating device (430) is in direct contact and is disposed on top of flat square-shaped pole piece (450); wherein the flat square-shaped pole piece (450) is in direct contact and is disposed on top of the second disc-shaped magnetic-field generating device (440); wherein the second disc-shaped magnetic-field generating device (440) is in direct contact and is disposed on top of the second flat square-shaped pole piece (470); and wherein the origin of the first disc-shaped magnetic-field generating device (430), of the second disc-shaped magnetic-field generating device (440), of the square-shaped flat pole piece (450) and of the second square-shaped pole piece (470) are aligned. Preferably, the distance (A1) between the upmost surface of the first disc-shaped magnetic-field generating device (430) and the lower surface of the substrate (420) facing the magnetic assembly (400) described herein is preferably between about 0 and about 5 mm, more preferably between about 0 and about 2.5 mm and still more preferably between about 0 and about 1 mm.

According to one embodiment, the magnetic assembly (x00) described herein comprises the first magnetic-field generating device (x30), the second magnetic-field generating device (x40) described herein, the flat pole piece (x50) described herein, the non-magnetic plate (x60) described herein and the second flat pole piece (x70) described herein.

According to one embodiment shown in Fig. 10, the magnetic assembly (500) described herein comprises a) the first magnetic-field generating device (530), in particular the first disc-shaped magnetic-field generating device (530), described herein, b) the second magnetic-field generating device (540), preferably the second disc-shaped magnetic-field generating device (540), described herein, c) the flat pole piece (550), preferably the flat square-shaped pole piece (550), described herein, d) the second flat pole piece (570), preferably the second flat square-shaped pole piece (570), described herein and e) the non-magnetic plate (560), preferably the square-shaped non-magnetic plate (560), described herein; wherein the first and second disc-shaped magnetic-field generating device (530, 540) have their North-South magnetic axis substantially perpendicular to the substrate (520) surface and have their North Pole pointing towards the substrate (520); wherein the diameter (L1) of the first disc-shaped magnetic-field generating device (530) is smaller than the diameter (L3) of the second disc-shaped magnetic-field generating device (540), the diameter (L3) of the second disc-shaped magnetic-field generating device (540) is smaller than the width (L5) of the flat shaped-shaped pole piece (550), and the width (L5) of the flat square-shaped pole piece (550) is the same as the width (L7) of the non-magnetic square-shaped plate (560) and is the same as the width (L9) of the second flat square -shaped pole piece (570); wherein the first disc-shaped magnetic-field generating device (530) is in direct contact and is disposed on top of the flat square -shaped pole piece (550); wherein the flat square-shaped pole piece (550) is in direct contact and is disposed on top of the non-magnetic square-shaped plate (560); wherein the non-magnetic square-shaped plate (560) is in direct contact and is disposed on top of the second disc-shaped magnetic-field generating device (540); wherein the second disc-shaped magnetic-field generating device (540) is in direct contact and is disposed on top of the second flat square-shaped pole piece (570); and wherein the origin of the first disc-shaped magnetic-field generating device (530), of the second disc-shaped magnetic-field generating device (540), of the square-shaped flat pole piece (550), of the second flat square-shaped pole piece (570) and of the non-magnetic square-shaped plate (560) are aligned. Preferably, the distance (A1) between the upmost surface of the first disc-shaped magnetic-field generating device (530) and the lower surface of the substrate (520) facing the magnetic assembly (500) described herein is preferably between about 0 and about 5 mm, more preferably between about 0 and about 2.5 mm and still more preferably between about 0 and about 1 mm.

The magnetic assembly (x00) described herein may further comprise a magnetized plate (x80) comprising one or more surface reliefs, engravings and/or cut-outs representing one or more indicia, wherein said magnetized plate (x80) is disposed on top of the first magnetic-field generating device (x30) thus facing the substrate (x20) (see Fig. 12). As used herein, the term "indicia" shall mean designs and patterns, including without limitation symbols, alphanumeric symbols, motifs, letters, words, numbers, logos and drawings. The one or more surface reliefs, engravings and/or cut-outs of the magnetized plate (x80) bear the indicia are transferred to the OEL in its non-cured state by locally modifying the magnetic field generated by the magnetic assembly (x00) described herein. Advantageously, the magnetized plate (x80) may be comprised on the top surface of the domed-shaped lid (x02) described herein.

Suitable examples of magnetized plates (x80) comprising the one or more surface reliefs, engravings and/or cut-outs described herein for the present invention can be found in in WO 2005/002866 A1, WO 2008/046702 A1 and WO 2008/139373 A1.

The magnetized plate (x80) described herein has a length L11. For embodiments comprising a square-shaped magnetized plate (x80), the length L11 described herein refers and corresponds to the width of said magnetized plate.

The magnetized plate (x80) may be disposed symmetrically or non-symmetrically with the first magnetic-field generating device (x30) described herein, the second magnetic-field generating device (x40), the flat pole piece (x50) described herein and the non-magnetic plate (x60) described herein, when present. Preferably and for reasons of mechanical balance, the magnetized plate (x80) is disposed symmetrically with the first magnetic-field generating device (x30) described herein, the second magnetic-field generating device (x40), the flat pole piece (x50) described herein, the non-magnetic plate (x60) described herein, when present, and the second flat pole piece (x70) described herein, when present.

The magnetized plate (x80) comprising one or more engravings and/or cut-outs described herein may be made from any mechanically workable permanent-magnetic material, such as permanent-magnetic composite materials, comprising a permanent magnetic powder in a malleable metal- or polymer matrix. Preferably, the magnetized plate (x80) described herein is a polymer-bonded plate of magnetic material, i.e. a magnetized plate (x80) made of a composite material comprising a polymer. The polymer (e.g. rubber- or plastic-like polymer) acts as a structural binder and the permanent magnetic powder material acts as an extender or filler. Magnetized plates made of a composite material comprising a polymer and a permanent magnetic powder material advantageously combine the desirable magnetic properties (high coercivity) of the otherwise brittle and not well workable ferrite, Alnico, rare-earth or still other magnets with the desirable mechanical properties (flexibility, machine-ability, shock-resistance) of a malleable metal or a plastic material.

Preferred polymers include rubber-type flexible materials such as nitrile rubbers, EPDM hydrocarbon rubbers, poly-isoprenes, polyamides (PA), poly-phenylene sulfides (PPS), and chlorosulfonated polyethylenes.

Preferred permanent magnetic powder materials include cobalt, iron and their alloys, chromium dioxide, generic magnetic oxide spinels, generic magnetic garnets, generic magnetic ferrites including the hexaferrites such as calcium-, strontium-, and barium-hexaferrite (CaFe12019, SrFe12019, BaFe12019, respectively), generic alnico alloys, generic samarium-cobalt (SmCo) alloys, and generic rare-earth-iron-boron alloys (such as NdFeB), as well as the permanent-magnetic chemical derivatives thereof (such as indicated by the term generic) and mixtures thereof. Plates made of a composite material comprising a polymer and a permanent magnetic powder are obtainable from many different sources, such as from Group ARNOLD (Plastiform^{®}) or from Materiali Magnetici, Albairate, Milano, IT (Plastoferrite).

The magnetized plate (x80) described herein, in particular the magnetized plate (x80) made of the composite material comprising the polymer and the permanent magnetic powder material described herein, can be obtained in any desired size and form, e.g. as a thin, flexible plates which can be bent and mechanically worked, e.g. cut to size or shape, using commonly available mechanical ablation tools and machines, as well as air or liquid jet ablation, or laser ablation tools.

The one or more surface engravings and/or cut-outs of the magnetized plate (x80) described herein, in particular the magnetized plate (x80) made of the composite material comprising the polymer and the permanent magnetic powder material described herein, may be produced by any cutting or engraving methods known in the art including without limitation casting, molding, hand-engraving or ablation tools selected from the group consisting of mechanical ablation tools (including computer-controlled engraving tools), gaseous or liquid jet ablation tools, by chemical etching, electro-chemical etching and laser ablation tools (e.g. CO²⁻, Nd-YAG or excimer lasers).. As is understood by the skilled man and described herein, the magnetized plate (x80) described herein, in particular the magnetized plate (x80) made of the composite material comprising the polymer and the permanent magnetic powder material described herein, can also be cut or molded to a particular size and shape, rather than engraved. Holes may be cut out of it, or cut-out pieces may be assembled on a support.

The one or more engravings and cut-outs of the magnetized plate (x80) in particular the magnetized plate (x80) made of the composite material comprising the polymer and the permanent magnetic powder material described herein, may be filled up with a polymer, which may contain fillers. Said filler may be a soft magnetic material, for modifying the magnetic flux at the locations of the one or more engravings/cut-outs, or it may be any other type of magnetic or non-magnetic material, in order to modify the magnetic field properties, or to simply produce a smooth surface. The magnetized plate (x80), in particular the magnetized plate (x80) made of the composite material comprising the polymer and the permanent magnetic powder material described herein, may additionally be surface-treated for facilitating the contact with the substrate, reducing friction and/or wear and/or electrostatic charging in a high-speed printing application.

Preferably, the magnetized plate (x80) described herein is made of the composite material comprising the polymer and the permanent magnetic powder material described herein, preferably made of plastoferrite, and comprises one or more engravings. The plastoferrite plate is engraved with a desired high resolution pattern having the form of indicia, either using a mechanical engraving tool, or, preferably, using an automated CO²⁻, Nd-YAG-laser engraving tool.

The magnetized plate (x80) described herein made of the composite material comprising the polymer and the permanent magnetic powder material described herein, preferably made of plastoferrite may be provided as a pre-formed plate and the one or more engravings and subsequently apply surface irregularities representing the indicia in accordance with the specific requirements of use.

According to one embodiment, the magnetic assembly (x00) described herein comprises the first magnetic-field generating device (x30), the second magnetic-field generating device (x40) described herein, the flat pole piece (x50) described herein, the non-magnetic plate (x60) described herein and the magnetized plate (x80) described herein.

According to one embodiment shown in Fig. 12, the magnetic assembly (600) described herein the magnetic assembly (600) described herein comprises a) the first magnetic-field generating device (630), in particular the first disc-shaped magnetic-field generating device (630), described herein, b) the second magnetic-field generating device (640), preferably the second disc-shaped magnetic-field generating device (640), described herein, c) the flat pole piece (650), preferably the flat square-shaped pole piece (650), described herein, d) the non-magnetic plate (660), preferably the square-shaped non-magnetic plate (660), described herein, and e) the magnetized plate (680), preferably the square-shaped magnetized plate (680), described herein; wherein the first and second disc-shaped magnetic-field generating device (630, 640) have their North-South magnetic axis substantially perpendicular to the substrate (620) and have their North Pole pointing towards the substrate (620); the magnetized plate (680), preferably the square-shaped magnetized plate (680), described herein; wherein the diameter (L1) of the first disc-shaped magnetic-field generating device (630) is smaller than the diameter (L3) of the second disc-shaped magnetic-field generating device (640), the diameter (L3) of the second disc-shaped magnetic-field generating device (630) is smaller than the width (L5) of the flat square -shaped pole piece (650), the width (L5) of the flat square-shaped pole piece (660) is the same as the width (L7) of the non-magnetic square-shaped plate (660), and the width (L11) of the square-shaped magnetized plate (680) is larger than the diameter (L1) of the first disc-shaped magnetic-field generating device (630), larger than the diameter (L3) of the second disc-shaped magnetic-field generating device (640), larger than the width (L5) of the flat square-shaped pole piece (650) and larger than the width (L7) of the non-magnetic square-shaped plate (660); wherein the first disc-shaped magnetic-field generating device (630) is in direct contact and is disposed on top of the flat square -shaped pole piece (650); wherein the flat square - shaped pole piece (650) is in direct contact and is disposed on top of the non-magnetic square-shaped plate (660); wherein the non-magnetic square-shaped plate (660) is in direct contact and is disposed on top of the second disc-shaped magnetic-field generating device (640); wherein the square-shaped magnetized plate (680) is in direct contact and is disposed on top of the first disc-shaped magnetic-field generating device (630) and is in direct contact with the substrate (620); and wherein the origin of the first disc-shaped magnetic-field generating device (630), of the second disc-shaped magnetic-field generating device (640), of the square-shaped flat pole piece (650), of the square-shaped magnetized plate (680) and of the non-magnetic square-shaped plate (660) are aligned.

The materials of the first magnetic-field generating device (x30), the materials of the second magnetic-field generating device (x40), the materials of the flat pole pieces (x50), the materials of the optional non-magnetic plate (x60), the materials of the optional second flat pole piece (x70), the materials of the optional magnetized plate (x80) and the distances (A1) and (A2) are selected such that the magnetic field resulting from the interaction of the magnetic field produced by the magnetic assembly (x00) is suitable for producing the optical effects layers described herein. The first magnetic-field generating device (x30), the second magnetic-field generating device (x40), the flat pole pieces (x50), the optional non-magnetic plate (x60), the optional second flat pole piece (x70) and the optional magnetized plate (x80) may interact so that the resulting magnetic field of the magnetic assembly (x00) is able to orient non-spherical magnetic or magnetizable pigment particles in an as yet uncured radiation curable coating composition on the substrate, which are disposed in the magnetic field of the magnetic assembly to produce an optical impression of a moon crescent moving and rotating upon tilting the substrate comprising the optical effect layer (OEL).

The present invention further provides printing apparatuses comprising a transferring dev ice being a rotating magnetic cylinder such as those described herein and one or more magnetic assemblies (x00) such as those described herein, wherein said one or more magnetic assemblies (x00) are mounted to circumferential grooves of the rotating magnetic cylinder as well as printing assemblies comprising a transferring dev ice being a flatbed printing unit such as those described herein and one or more of the magnetic assemblies (x00) described herein, wherein said one or more magnetic assemblies (x00) are mounted to recesses of the flatbed printing unit.

The rotating magnetic cylinder is meant to be used in, or in conjunction with, or being part of a printing or coating equipment, and bearing one or more magnetic assemblies described herein. In an embodiment, the rotating magnetic cylinder is part of a rotary, sheet-fed or web-fed industrial printing press that operates at high printing speed in a continuous way.

The flatbed printing unit is meant to be used in, or in conjunction with, or being part of a printing or coating equipment, and bearing one or more of the magnetic assemblies described herein. In an embodiment, the flatbed printing unit is part of a sheet-fed industrial printing press that operates in a discontinuous way.

The printing apparatuses comprising the rotating magnetic cylinder described herein or the flatbed printing unit described herein may include a substrate feeder for feeding a substrate such as those described herein having thereon a layer of non-spherical magnetic or magnetizable pigment particles described herein, so that the magnetic assemblies generate a magnetic field that acts on the pigment particles to orient them to form an optical effect layer (OEL). In an embodiment of the printing apparatuses comprising a rotating magnetic cylinder described herein, the substrate is fed by the substrate feeder under the form of sheets or a web. In an embodiment of the printing apparatuses comprising a flatbed printing unit described herein, the substrate is fed under the form of sheets.

The printing apparatuses comprising the rotating magnetic cylinder described herein or the flatbed printing unit described herein may include a coating or printing unit for applying the radiation curable coating composition comprising the non-spherical magnetic or magnetizable pigment particles described herein on the substrate described herein, the radiation curable coating composition comprising non-spherical magnetic or magnetizable pigment particles that are oriented by the magnetic-field generated by the apparatuses described herein to form an optical effect layer (OEL). In an embodiment of the printing apparatuses comprising a rotating magnetic cylinder described herein, the coating or printing unit works according to a rotary, continuous process. In an embodiment of the printing apparatuses comprising a flatbed printing unit described herein, the coating or printing unit works according to a longitudinal, discontinuous process.

The printing apparatuses comprising the rotating magnetic cylinder described herein or the flatbed printing unit described herein may include a curing unit for at least partially curing the radiation curable coating composition comprising non-spherical magnetic or magnetizable pigment particles that have been magnetically oriented by the apparatuses described herein, thereby fixing the orientation and position of the non-spherical magnetic or magnetizable pigment particles to produce an optical effect layer (OEL).

According to one embodiment and provided that the non-spherical magnetic or magnetizable pigment particles are platelet-shaped pigment particles, the process for producing the optical effect layer (OEL) described herein may further comprise a step of exposing the radiation curable coating composition described herein to a dynamic magnetic field of a first magnetic-field-generating device so as to bi-axially orient at least a part of the platelet-shaped magnetic or magnetizable pigment particles, said step being carried out after step i) and before step ii). Processes comprising such a step of exposing a coating composition to a dynamic magnetic field of a first magnetic-field-generating device so as to bi-axially orient at least a part of the platelet-shaped magnetic or magnetizable pigment particles before a step of further exposing the coating composition to a second magnetic-field-generating device, in particular to the magnetic field of the magnetic assembly described herein, are disclosed in WO 2015/ 086257 A1. Subsequently to the exposure of the radiation curable coating composition to the dynamic magnetic field of the first magnetic-field-generating device described herein and while the radiation curable coating composition is still wet or soft enough so that the platelet-shaped magnetic or magnetizable pigment particles therein can be further moved and rotated, the platelet-shaped magnetic or magnetizable pigment particles are further re-oriented by the use of the apparatus described herein.

Carrying out a bi-axial orientation means that platelet-shaped magnetic or magnetizable pigment particles are made to orientate in such a way that their two main axes are constrained. That is, each platelet-shaped magnetic or magnetizable pigment particle can be considered to have a major axis in the plane of the pigment particle and an orthogonal minor axis in the plane of the pigment particle. The major and minor axes of the platelet-shaped magnetic or magnetizable pigment particles are each caused to orient according to the dynamic magnetic field. Effectively, this results in neighboring platelet-shaped magnetic pigment particles that are close to each other in space to be essentially parallel to each other. In order to perform a bi-axial orientation, the platelet-shaped magnetic pigment particles must be subjected to a strongly time-dependent external magnetic field. Put another way, bi-axial orientation aligns the planes of the platelet-shaped magnetic or magnetizable pigment particles so that the planes of said pigment particles are oriented to be essentially parallel relative to the planes of neighboring (in all directions) platelet-shaped magnetic or magnetizable pigment particles. In an embodiment, both the major axis and the minor axis perpendicular to the major axis described hereabove of the planes of the platelet-shaped magnetic or magnetizable pigment particles are oriented by the dynamic magnetic field so that neighboring (in all directions) pigment particles have their major and minor axes aligned with each other.

According to one embodiment, the step of carrying out a bi-axial orientation of the platelet-shaped magnetic or magnetizable pigment particles leads to a magnetic orientation wherein the platelet-shaped magnetic or magnetizable pigment particles have their two main axes substantially parallel to the substrate surface. For such an alignment, the platelet-shaped magnetic or magnetizable pigment particles are planarized within the radiation curable coating composition on the substrate and are oriented with both their X-axis and Y-axis (shown in Figure 1 of WO 2015/086257 A1) parallel with the substrate surface. According to another embodiment, the step of carrying a bi-axial orientation of the platelet-shaped magnetic or magnetizable pigment particles leads to a magnetic orientation wherein the platelet-shaped magnetic or magnetizable pigment particles have a first axis within the X-Y plane substantially parallel to the substrate surface and a second axis being substantially perpendicular to said first axis at a substantially non-zero elevation angle to the substrate surface. According to another embodiment, the step of carrying a bi-axial orientation of the platelet-shaped magnetic or magnetizable pigment particles leads to a magnetic orientation wherein the platelet-shaped magnetic or magnetizable pigment particles have their X-Y plane substantially parallel to an imaginary spheroid surface.

Particularly preferred magnetic-field-generating devices for bi-axially orienting the platelet-shaped magnetic or magnetizable pigment particles are disclosed in EP 2 157 141 A1. The magnetic-field-generating device disclosed in EP 2 157 141 A1 provides a dynamic magnetic field that changes its direction forcing the platelet-shaped magnetic or magnetizable pigment particles to rapidly oscillate until both main axes, X-axis and Y-axis, become substantially parallel to the substrate surface, i.e. the platelet-shaped magnetic or magnetizable pigment particles rotate until they come to the stable sheet-like formation with their X and Y axes substantially parallel to the substrate surface and are planarized in said two dimensions.

Other particularly preferred magnetic-field-generating devices for bi-axially orienting the platelet-shaped magnetic or magnetizable pigment particles comprise linear permanent magnet Halbach arrays, i.e. assemblies comprising a plurality of magnets with different magnetization directions. Detailed description of Halbach permanent magnets was given by Z.Q. Zhu et D. Howe (Halbach permanent magnet machines and applications: a review, IEE. Proc. Electric Power Appl., 2001, 148, p. 299-308). The magnetic field produced by such a Halbach array has the properties that it is concentrated on one side while being weakened almost to zero on the other side. The co-pending Application EP 14195159.0 discloses suitable devices for bi-axially orienting platelet-shaped magnetic or magnetizable pigment particles, wherein said devices comprise a Halbach cylinder assembly. Other particularly preferred magnetic-field-generating devices for bi-axially orienting the platelet-shaped magnetic or magnetizable pigment particles are spinning magnets, said magnets comprising disc-shaped spinning magnets or magnetic assemblies that are essentially magnetized along their diameter. Suitable spinning magnets or magnetic assemblies are described in US 2007/0172261 A1, said spinning magnets or magnetic assemblies generate radially symmetrical time-variable magnetic fields, allowing the bi-orientation of platelet-shaped magnetic or magnetizable pigment particles of a not yet cured or hardened coating composition. These magnets or magnetic assemblies are driven by a shaft (or spindle) connected to an external motor. CN 102529326 B discloses examples of magnetic-field-generating devices comprising spinning magnets that might be suitable for bi-axially orienting platelet-shaped magnetic or magnetizable pigment particles. In a preferred embodiment, suitable magnetic-field-generating devices for bi-axially orienting platelet-shaped magnetic or magnetizable pigment particles are shaft-free disc-shaped spinning magnets or magnetic assemblies constrained in a housing made of non-magnetic, preferably non-conducting, materials and are driven by one or more magnet-wire coils wound around the housing. Examples of such shaft-free disc-shaped spinning magnets or magnetic assemblies are disclosed in WO 2015/082344 A1 and in the co-pending Application EP 14181939.1.

The substrate described herein is preferably selected from the group consisting of papers or other fibrous materials, such as cellulose, paper-containing materials, glasses, metals, ceramics, plastics and polymers, metalized plastics or polymers, composite materials and mixtures or combinations thereof. Typical paper, paper-like or other fibrous materials are made from a variety of fibers including without limitation abaca, cotton, linen, wood pulp, and blends thereof. As is well known to those skilled in the art, cotton and cotton/linen blends are preferred for banknotes, while wood pulp is commonly used in non-banknote security documents. Typical examples of plastics and polymers include polyolefins such as polyethylene (PE) and polypropylene (PP), polyamides, polyesters such as poly(ethylene terephthalate) (PET), poly(1,4-butylene terephthalate) (PBT), poly(ethylene 2,6-naphthoate) (PEN) and polyvinylchlorides (PVC). Spunbond olefin fibers such as those sold under the trademark Tyvek^{®} may also be used as substrate. Typical examples of metalized plastics or polymers include the plastic or polymer materials described hereabove having a metal disposed continuously or discontinuously on their surface. Typical example of metals include without limitation aluminum (Al), chromium (Cr), copper (Cu), gold (Au), iron (Fe), nickel (Ni), silver (Ag), combinations thereof or alloys of two or more of the aforementioned metals. The metallization of the plastic or polymer materials described hereabove may be done by an electrodeposition process, a high-vacuum coating process or by a sputtering process. Typical examples of composite materials include without limitation multilayer structures or laminates of paper and at least one plastic or polymer material such as those described hereabove as well as plastic and/or polymer fibers incorporated in a paper-like or fibrous material such as those described hereabove. Of course, the substrate can comprise further additives that are known to the skilled person, such as sizing agents, whiteners, processing aids, reinforcing or wet strengthening agents, *etc*.. The substrate described herein may be provided under the form of a web (e.g. a continuous sheet of the materials described hereabove) or under the form of sheets. Should the OEL produced according to the present invention be on a security document, and with the aim of further increasing the security level and the resistance against counterfeiting and illegal reproduction of said security document, the substrate may comprise printed, coated, or laser-marked or laser-perforated indicia, watermarks, security threads, fibers, planchettes, luminescent compounds, windows, foils, decals and combinations of two or more thereof. With the same aim of further increasing the security level and the resistance against counterfeiting and illegal reproduction of security documents, the substrate may comprise one or more marker substances or taggants and/or machine readable substances (e.g. luminescent substances, UV/visible/IR absorbing substances, magnetic substances and combinations thereof).

The optical effect layer (OEL) described herein may be provided directly on a substrate on which it shall remain permanently (such as for banknote applications). Alternatively, an optical effect layer (OEL) may also be provided on a temporary substrate for production purposes, from which the OEL is subsequently removed. This may for example facilitate the production of the OEL, particularly while the binder material is still in its fluid state. Thereafter, after at least partially curing the coating composition for the production of the OEL, the temporary substrate may be removed from the OEL.

Alternatively, an adhesive layer may be present on the OEL or may be present on the substrate comprising an optical effect layer (OEL), said adhesive layer being on the side of the substrate opposite the side where the OEL is provided or on the same side as the OEL and on top of the OEL. Therefore an adhesive layer may be applied to the optical effect layer (OEL) or to the substrate. Such an article may be attached to all kinds of documents or other articles or items without printing or other processes involving machinery and rather high effort. Alternatively, the substrate described herein comprising the OEL described herein may be in the form of a transfer foil, which can be applied to a document or to an article in a separate transfer step. For this purpose, the substrate is provided with a release coating, on which the OEL are produced as described herein. One or more adhesive layers may be applied over the so produced OEL.

Also described herein are substrates comprising more than one, i.e. two, three, four, etc. optical effect layers (OEL) obtained by the process described herein.

Also described herein are articles, in particular security documents, decorative elements or objects, comprising the optical effect layer (OEL) produced according to the present invention. The articles, in particular security documents, decorative elements or objects, may comprise more than one (for example two, three, etc.) OELs produced according to the present invention.

As mentioned hereabove, the optical effect layer (OEL) produced according to the present invention may be used for decorative purposes as well as for protecting and authenticating a security document. Typical examples of decorative elements or objects include without limitation luxury goods, cosmetic packaging, automotive parts, electronic/electrical appliances, furniture and fingernail lacquers.

Security documents include without limitation value documents and value commercial goods. Typical example of value documents include without limitation banknotes, deeds, tickets, checks, vouchers, fiscal stamps and tax labels, agreements and the like, identity documents such as passports, identity cards, visas, driving licenses, bank cards, credit cards, transactions cards, access documents or cards, entrance tickets, public transportation tickets or titles and the like, preferably banknotes, identity documents, right-conferring documents, driving licenses and credit cards. The term "value commercial good" refers to packaging materials, in particular for cosmetic articles, nutraceutical articles, pharmaceutical articles, alcohols, tobacco articles, beverages or foodstuffs, electrical/electronic articles, fabrics or jewelry, i.e. articles that shall be protected against counterfeiting and/or illegal reproduction in order to warrant the content of the packaging like for instance genuine drugs. Examples of these packaging materials include without limitation labels, such as authentication brand labels, tamper evidence labels and seals. It is pointed out that the disclosed substrates, value documents and value commercial goods are given exclusively for exemplifying purposes, without restricting the scope of the invention.

Alternatively, the optical effect layer (OEL) may be produced onto an auxiliary substrate such as for example a security thread, security stripe, a foil, a decal, a window or a label and consequently transferred to a security document in a separate step.

### EXAMPLES

Magnetic assemblies illustrated in Fig. 1-12 were used to orient non-spherical optically variable magnetic pigment particles in a printed layer of the UV-curable screen printing ink described in Table 1 so as to produce optical effect layers (OELs) shown in Fig. 1B-11. Comparative assemblies illustrated in Fig. 14 and 16 were used to orient non-spherical optically variable magnetic pigment particles in a printed layer of the UV-curable screen printing ink described in Table 1 so as to produce comparative optical effect layers (OELs) shown in Fig. 15A and 17A.

The UV-curable screen printing ink was applied onto a black commercial paper (a fiduciary standard paper BNP 90g/m2, from Papierfabrik Louisenthal, 50 × 50 mm), said application being carried out by hand screen printing using a T90 screen so as to form a coating layer (36 mm × 36 mm) having a thickness of about 20 µm. The substrate carrying the applied layer of the UV-curable screen printing ink was disposed on the magnetic assembly. The so-obtained magnetic orientation pattern of the non-spherical optically variable pigment particles was, partially simultaneously to the orientation step, fixed by UV-curing the printed layer comprising the pigment particles using a UV-LED-lamp from Phoseon (Type FireFlex 50 × 75 mm, 395 nm, 8 W/cm²).

**Table 1. UV-curable screen printing ink (coating composition):**

| | |
|---|---|
| Epoxyacrylate oligomer | 28% |
| Trimethylolpropane triacrylate monomer | 19.5% |
| Tripropyleneglycol diacrylate monomer | 20% |
| Genorad^{™} 16 (Rahn) | 1% |
| Aerosil^{®} 200 (Evonik) | 1% |
| Speedcure TPO-L (Lambson) | 2% |
| IRGACURE^{®} 500 (BASF) | 6% |
| Genocure EPD (Rahn) | 2% |
| Tego^{®} Foamex N (Evonik) | 2% |
| Non-spherical optically variable magnetic pigment particles (7 layers)(*) | 16.5% |

| | |
|---|---|
| (*) gold-to-green optically variable magnetic pigment particles having a flake shape of diameter d50 about 9 µm and thickness about 1 µm, obtained from Viavi Solutions, Santa Rosa, CA. | |

### Devices and Materials

The first magnetic-field-generating devices (x30) and the second magnetic-field-generating devices (x40) were made of NdFeB N30. As shown in Fig. 1-12, the magnetic assemblies (x00) independently comprised the first magnetic-field-generating device (x30) and the second magnetic-field-generating device (x40), wherein said first magnetic-field-generating device (x30) was disposed on top of said second magnetic-field-generating device (x40) and wherein both of said devices (x30, x40) had their North-South magnetic axis substantially perpendicular to the substrate (x20) surface with the North pole pointing towards the substrate (x20).

As shown in Fig. 1-12, the magnetic assemblies (x00) independently comprised the flat pole piece (x50), wherein said flat pole piece (x50) was disposed between the first magnetic-field-generating device (x30) and the second magnetic-field-generating device (x40). The flat pole pieces (x50) were independently made of iron.

As shown in Fig. 4, 6, 10 and 12, the magnetic assemblies (x00) independently comprised the non-magnetic plate (x60), wherein said non-magnetic plate (x60) was disposed between the first magnetic-field-generating device (x30) and the second magnetic-field-generating device (x40). The non-magnetic plates (x60), when present, were independently made of POM.

As shown in Fig. 8-10, the magnetic assemblies (x00) independently comprised the second flat pole piece (x70), wherein said second flat pole piece (x70) was disposed below the second magnetic-field-generating device (x40) and faced the environment. The second flat pole pieces (x70), when present, were independently made of iron.

The magnetized plate (x80) comprising an indicium having the shape of "50" (x80) was made of plastoferrite (TROMAFLEX^{®} from Max Baermann GmbH, Bergisch Gladbach). The magnetized plate (x80) was magnetized in a direction perpendicular to the substrate (x20) surface and then engraved on a computer-controlled mechanical engraving station with a geometrical design ("50" indicium) having a dimension of 2.5 mm × 3.0 mm. The engravings of the square-shaped magnetized plate (x80) had a depth of engraving of about 0.2 mm and a width of line of about 1 mm). As shown in Fig. 12, the magnetic assemblies (600) independently comprised the magnetized plate (680), wherein said magnetized plate (680) was disposed on top of the first magnetic-field-generating device (630) and below the substrate (620).

The non-flat pole pieces (x90) and the flat pole piece (x91), when present, were independently made of iron.

The dimensions and shape of the first magnetic-field-generating device (x30), the second magnetic-field-generating device (x40), the flat pole piece (x50), the non-magnetic plate (x60), the second flat pole piece (x70) and the magnetized plate (x80) of Examples E1-E13 are provided in Table 2. The distance A1 between the top surface of the first magnetic-field-generating device (x30) and the lower surface of the substrate (x20) facing the magnetic assembly (x00) and the distance A2 between the top surface of the second magnetic-field-generating device (x40) and the lower surface of the first magnetic-field-generating devices (x30) of Examples E1-E13 are provided in Table 2.

The dimensions and the shape of the first magnetic-field-generating device (x30), the second magnetic-field-generating device (x40), the flat pole piece (x91) and the non-flat pole piece (x90) of Comparative Examples C1-C2 are provided in Table 3. The distance A1 between the top surface of the first magnetic-field-generating device (x30) and the lower surface of the substrate (x20) facing the magnetic assembly (x00) and the distance A2 between the top surface of the second magnetic-field-generating device (x40) and the lower surface of the first magnetic-field-generating device (x30) of Comparative Examples C1-C2 are provided in Table 3.

Holders (x01) were independently used for inserting the magnetic assemblies (x00) used to prepare Examples 1-13 (E1-E13) and Comparative Examples 1-2 (C1-C2). The holder (101) illustrated in Fig 2 was used for the preparation of Example E3, wherein said holder (101) comprised a domed-shaped lid (102), a bottom locking (103), a non-magnetic wedge (104) and a non-magnetic matrix (141). The holder (101) had a length and a width (L21) of about 40 mm, a central thickness (L19) of about 15.15 mm, an edge thickness (L20) of about 14.80 mm. The curvature (L-R) of the domed-shaped lid (102) top surface was that of a circle having a radius (L-R) of about 137.5 mm. The bottom locking (103) of the holder (101) had a length and a width (L23) of about 32 mm, and a thickness (L22) of about 3 mm. The non-magnetic wedge (104) had a length and a width (L25) of about 30 mm and a thickness (L24) of about 5.8 mm. The holder (101) illustrated in Fig 2 further comprises a non-magnetic matrix (141) comprising a void suitable for receiving the second magnetic-field-generating device (140), said non-magnetic matrix (141) being a square-shaped plate having a length (L25) of about 30 mm and a thickness (L4) of about 2 mm and comprising a disc-shaped void having a diameter (L3) of about 20 mm. The domed-shaped lid (102) and the bottom locking (103) of the holder (101) were made of poylphenylene sulfide (PPS). The non-magnetic wedge (104) and the non-magnetic matrix (141) were independently made of POM.

Examples 1-13 (E1-E13) and Comparative Examples 1-2 (C11-C2) were independently prepared with the magnetic assemblies (x00) encased within holders (x01) having the same external dimensions as the holder (101) described hereabove for Example 3 (E3). The thickness of the wedge (x04) was adapted to vary the distance (A1) and the non-magnetic matrix (x41) was adapted to fit to the second magnetic-field-generating device (x40).

The resulting OEL (x10) produced with the magnetic assembly (x00) illustrated in Fig. 1-12 are shown in Fig. 3A-13A at different viewing angles by tilting the substrate (x20) between -30° and +30° and the description of the optical impression of said OELs is provided in Table 2.

The resulting comparative OEL produced with the magnetic assembly illustrated in Fig. 14-16 are shown in Fig. 15A-17A at different viewing angles by tilting the substrate between -30° and +30° and the description of the optical impression of said OELs is provided in Table 3.

**Table 2**

| | **Fig.** | **x30** | **x40** | **x50** | **x60** | **x70** | **x80** | **A1** | **A2** | **Optical impression of the OEL by tilting** the **substrate (x20) between -30° and +30°** |
|---|---|---|---|---|---|---|---|---|---|---|
| | | **L1 X L2** | **L3 X L4** | **L5 X L6** | **L7 X L8** | **L9 X L10** | **L11 X L12** | | | |
| | | **[mm]** | **[mm]** | **[mm]** | **[mm]** | **[mm]** | **[mm]** | **[mm]** | **[mm]** | |
| **E1** | 1 | disc | disc | square | | | | 0.35 | 6 | Fig. 3A: moving and rotating crescent moon effect around a circular dark area |
| | | 5 x 3 | 20 x 2 | 30 x 6 | | | | | (L6) | |
| **E2** | 1 | disc | disc | square | | | | 0 | 1 | Fig. 3B: moving and rotating crescent moon effect around a circular dark area |
| | | 5 x 3 | 20 x 2 | 30 x 1 | | | | | (L6) | |
| **E3** | 1 | disc | disc | square | | | | 0.35 | 1 | Fig. 3C: moving and rotating crescent moon effect around a circular dark area |
| | | 5 x 3 | 20 x 2 | 30 x 1 | | | | | (L6) | |
| **E4** | 1 | disc | disc | square | | | | 1.35 | 1 | Fig. 3D: moving and rotating crescent moon effect around a circular dark area |
| | | 5 x 3 | 20 x 2 | 30 x 1 | | | | | (L6) | |
| **E5** | 1 | square | square | square | | | | 0 | 1 | Fig. 3E: moving and rotating crescent moon effect around a circular dark area |
| | | 5 x 2 | 15 x 3 | 30 x 1 | | | | | (L6) | |
| **E6** | 4 | disc | disc | square | square | | | 0.35 | 2 | Fig. 5A: moving and rotating crescent moon effect around a circular dark area |
| | | 5 x 3 | 20 x 2 | 30 x 1 | 30 x 1 | | | | (L6 + L8) | |
| **E7** | 4 | disc | disc | disc | square | | | 0.35 | 3 | Fig. 5B: moving and rotating crescent moon effect around a circular dark area |
| | | 5 x 3 | 9 x 5 | 30 x 2 | 30 x 1 | | | | (L6 + L8) | |
| **E8** | 4 | disc | disc | square | square | | | 0.35 | 7 | Fig. 5C: moving and rotating crescent moon effect around a circular dark area |
| | | 5 x 3 | 20 x 2 | 30 x 1 | 30 x 6 | | | | (L6 + L8) | |
| **E9** | 6 | disc | disc | square | square | | | 0.35 | 2 | Fig. 7A: moving and rotating crescent moon effect around a circular dark area |
| | | 5 x 3 | 20 x 2 | 30 x 1 | 30 x 1 | | | | (L6 + L8) | |
| **E10** | 6 | dis | disc | square | square | | | 0.35 | 7 | Fig. 7B: moving and rotating crescent moon effect around a circular dark area |
| | | 5 x 3 | 20 x 2 | 30 x 1 | 30 x 6 | | | | (L6 + L8) | |
| **E11** | 8 | disc | disc | square | | square | | 0.35 | 1 | Fig. 9A: moving and rotating crescent moon effect around a circular dark area |
| | | 5 x 3 | 20 x 2 | 30 x 1 | | 30 x 1 | | | (L6) | |
| **E12** | 10 | disc | disc | square | square | square | | 0.35 | 4 | Fig. 11A: moving and rotating crescent moon effect around a circular dark area |
| | | 5 x 3 | 20 x 2 | 30 x 1 | 30 x 3 | 30 x 1 | | | (L6 + L8) | |
| **E13** | 12 | disc | disc | square | square | | square | 0.90 | 2 | Fig. 13A: moving and rotating crescent moon effect around a circular dark area |
| | | 5 x 2 | 20 x 2 | 30 x 1 | 30 x 1 | | 38 x 0.9 | (L12) | (L6 + L8) | |

**Table 3**

| | **Fig.** | **x30** | **x40** | **x90** | **x91** | **A1** | **A2** | **Optical impression of the OEL by tilting the substrate (x20) between -30° and +30°** |
|---|---|---|---|---|---|---|---|---|
| | | **L1 X L2** | **L3 X L4** | **L13 X L14** | **L17 X L18** | | | |
| | | | | **L15 X L16** | | | | |
| | | **[mm]** | **[mm]** | **[mm]** | **[mm]** | **[mm]** | **[mm]** | |
| **C1** | 14 | disc | disc | | | 0 | 0 | Fig. 15A: moving single ring-shaped effect |
| | | 5 x 3 | 20 x 2 | | | | | |
| **C2** | 16 | disc | disc | disc | disc | 0 | 1 | Fig. 17A: moving double ring-shaped effect |
| | | 6 x 1 | 6 x 1 | 10 x 2 | 30 x 2 | | | |
| | | | | 8 x 1 | | | | |

## Claims

1. A process for producing an optical effect layer (OEL) (x10) on a substrate (x20), said process comprising the steps of:
i) applying on a substrate (x20) surface a radiation curable coating composition comprising non-spherical magnetic or magnetizable pigment particles, said radiation curable coating composition being in a first state, said first state being a liquid state;
ii) exposing the radiation curable coating composition to a magnetic field of a magnetic assembly (x00) comprising:
a) a first magnetic-field generating device (x30) having its North-South magnetic axis substantially perpendicular to the substrate (x20) surface and having length L1;
b) a second magnetic-field generating device (x40) having its North-South magnetic axis substantially perpendicular to the substrate (x20) surface and having a length L3,
c) a flat pole piece (x50) lacking any protrusions or projections extending outside the surface of said pole piece and having a length L5,
wherein the first magnetic-field generating device (x30) and the second magnetic-field generating device (x40) have a same magnetic field direction,
wherein the first magnetic-field generating device (x30) faces the substrate (x20) and is disposed on top of the pole piece (x50),
wherein the second magnetic-field generating device (x40) faces the environment and is disposed below the flat pole piece (x50),
wherein the length L1 of the first magnetic-field generating device (x30) is smaller than the length L3 of the second magnetic-field generating device (x40),
wherein the length L1 of the first magnetic-field generating device (x30) is smaller than the length L5 of the flat pole piece (x50), and
wherein the length L3 of the second magnetic-field generating device (x40) is smaller than the length L5 of the pole piece (x50),
so as to orient at least a part of the non-spherical magnetic or magnetizable pigment particles; and
iii) at least partially curing the radiation curable coating composition of step ii) to a second state so as to fix the non-spherical magnetic or magnetizable pigment particles in their adopted positions and orientations,
wherein the optical effect layer provides an optical impression of a moon crescent moving and rotating upon tilting the substrate comprising the optical effect layer (OEL).

2. The process according to claim 1, wherein the magnetic assembly (x00) further comprises a non-magnetic plate (x60), preferably made of polyoxymethylene (POM).

3. The process according to any preceding claim, wherein the magnetic assembly (x00) further comprises a second flat pole piece (x70) having a length L9, wherein said second pole piece is disposed below the second magnetic-field generating device (x40) thus facing the environment.

4. The process according to any preceding claim, wherein the magnetic assembly (x00) further comprises a magnetized plate (x80) comprising one or more engravings and/or cut-outs representing one or more indicia,
wherein said magnetized plate (x80) is preferably made of a composite material comprising a polymer and a permanent magnetic powder material, and
wherein magnetized plate (x80) is disposed on top of the first magnetic-field generating device (x30) thus facing the substrate (x20).

5. The process according to any preceding claim, wherein the flat pole piece (x50) is made of iron.

6. The process according to any preceding claim, wherein the first magnetic-field generating device (x30) and the second first magnetic-field generating device (x40) are disc-shaped magnetic-field generating devices and their length L1 and L3 correspond to their diameter or are square-shaped magnetic-field generating device and their length L1 and L3 correspond to the their width.

7. The process according to any preceding claim, wherein the non-spherical magnetic or magnetizable pigment particles are selected from the group consisting of magnetic thin-film interference pigments, magnetic cholesteric liquid crystal pigments and mixtures thereof.

8. The process according to any preceding claim, wherein step iii) is carried out partially simultaneously with the step ii).

9. The process according to any preceding claim, wherein the non-spherical magnetic or magnetizable particles are platelet-shaped pigment particles, and wherein said process further comprises a step of exposing the radiation curable coating composition to a dynamic magnetic field of a first magnetic-field-generating device so as to bi-axially orient at least a part of the platelet-shaped magnetic or magnetizable pigment particles, said step being carried out after step i) and before step ii).

10. An optical effect layer (OEL) (x10) produced by the process recited in any one of claims 1 to 9.

11. A security document or a decorative element or object comprising one or more optical effect layers (OEL) recited in claim 10.

12. A magnetic assembly (x00) for producing an optical effect layer (OEL) (x10) on a substrate (x20), said OEL providing an impression of a crescent moon-shaped element moving or rotating upon tilting the optical effect layer (OEL) and comprising oriented non-spherical magnetic or magnetizable pigment particles in a cured radiation curable coating composition, wherein said magnetic assembly (x00) comprises:
a) a first magnetic-field generating device (x30) having its North-South magnetic axis substantially perpendicular to the substrate (x20) surface and having a length L1;
b) a second magnetic-field generating device (x40) having its North-South magnetic axis substantially perpendicular to the substrate (x20) surface and having a length L3,
c) a flat pole piece (x50) lacking any protrusions or projections extending outside the surface of said pole piece and having a length L5,
wherein the first magnetic-field generating device (x30) and the second magnetic-field generating device (x40) have a same magnetic field direction,
wherein the first magnetic-field generating device (x30) faces the substrate (x20) and is disposed on top of the pole piece (x50),
wherein the second magnetic-field generating device (x40) faces the environment and is disposed below the pole piece (x50),
wherein the length L1 of the first magnetic-field generating device (x30) is smaller than the length L3 of the second magnetic-field generating device (x40),
wherein the length L1 of the first magnetic-field generating device (x30) is smaller than the length L5 of the pole piece (x50), and
wherein the length L3 of the second magnetic-field generating device (x40) is smaller than the length L5 of the pole piece (x50).

13. The magnetic assembly (x00) according to claim 12 further comprising a non-magnetic plate (x60) and/or
further comprising a second flat pole piece (x70) having a length L9, wherein said second pole piece is disposed below the second magnetic-field generating device (x40) thus facing the environment and wherein the length L1 of the first magnetic-field generating device (x30) is smaller than the length L9 of said second pole piece (x70) and the length L3 of the second magnetic-field generating device (x40) is smaller than the length L9 of said second pole piece (x70), and/or
further comprising a magnetized plate (x80) comprising one or more engravings and/or cut-outs representing one or more indicia, wherein said magnetized plate (x80) is preferably made of a composite material comprising a polymer and a permanent magnetic powder material, and wherein magnetized plate (x80) is disposed on top of the first magnetic-field generating device (x30) thus facing the substrate (x20).

14. The magnetic assembly according to claim 12 or 13, wherein the magnetic assembly (x00) is disposed in a holder (x01) mounted on a transferring device being preferably a rotating magnetic cylinder.

15. A printing apparatus comprising a rotating magnetic cylinder comprising at least one of the magnetic assemblies (x00) recited in any one of claims 12 to 14 or a flatbed printing unit comprising at least one of the magnetic assemblies (x30) recited in any one of claims 12 to 14.

## Patentansprüche

1. Ein Verfahren zur Herstellung einer Optikeffektschicht (OEL) (x10) auf einem Substrat (x20), wobei das Verfahren die Schritte aufweist:
a) Aufbringen, auf eine Oberfläche des Substrats (x20), einer durch Strahlung härtbaren Beschichtungszusammensetzung, die nicht-sphärische magnetische oder magnetisierbare Pigmentpartikel aufweist, wobei sich die genannte durch Strahlung härtbare Beschichtungszusammensetzung in einem ersten Zustand befindet und der erste Zustand ein flüssiger Zustand ist;
ii) Aussetzen der durch Strahlung härtbaren Beschichtungszusammensetzung einem Magnetfeld einer Magnetanordnung (x00), die aufweist:
a) eine erste Magnetfelderzeugungsvorrichtung (x30), deren Nord-Süd-Magnetachse im Wesentlichen senkrecht zur Oberfläche des Substrats (x20) verläuft und die die Länge L1 aufweist;
b) eine zweite Magnetfelderzeugungsvorrichtung (x40), deren Nord-Süd-Magnetachse im Wesentlichen senkrecht zur Oberfläche des Substrats (x20) verläuft und die eine Länge L3 aufweist,
c) einen flachen Polschuh (x50) ohne jegliche Vorsprünge oder Erhebungen, die sich über die Oberfläche des Polschuhs hinaus erstrecken, und das eine Länge L5 aufweist,
wobei die erste Magnetfelderzeugungsvorrichtung (x30) und die zweite Magnetfelderzeugungsvorrichtung (x40) die gleiche Richtung des Magnetfeldes haben,
wobei die erste Magnetfelderzeugungsvorrichtung (x30) dem Substrat (x20) zugewandt und oben auf dem Polschuh (x50) angeordnet ist,
wobei die zweite Magnetfelderzeugungsvorrichtung (x40) der Umgebung zugewandt und unterhalb des flachen Polschuhs (x50) angeordnet ist,
wobei die Länge L1 der ersten Magnetfelderzeugungsvorrichtung (x30) kleiner ist als die Länge L3 der zweiten Magnetfelderzeugungsvorrichtung (x40),
wobei die Länge L1 der ersten Magnetfelderzeugungsvorrichtung (x30) kleiner ist als die Länge L5 des flachen Polschuhs (x50), und
wobei die Länge L3 der zweiten Magnetfelderzeugungsvorrichtung (x40) kleiner ist als die Länge L5 des Polschuhs (x50),
um mindestens einen Teil der nicht-sphärischen magnetischen oder magnetisierbaren Pigmentpartikel zu orientieren; und
iii) zumindest teilweises Härten der durch Strahlung härtbaren Beschichtungszusammensetzung vom Schritt ii) in einen zweiten Zustand, um die nicht-sphärischen magnetischen oder magnetisierbaren Pigmentpartikel in ihren angenommenen Positionen und Orientierungen zu fixieren,
wobei die Optikeffektschicht einen optischen Eindruck einer Mondsichel vermittelt, die sich beim Kippen des Substrats, das die Optikeffektschicht (OEL) aufweist, bewegt und dreht.

2. Das Verfahren nach Anspruch 1, wobei die Magnetanordnung (x00) weiterhin eine nichtmagnetische Platte (x60) aufweist, die vorzugsweise aus Polyoxymethylen (POM) besteht.

3. Das Verfahren nach einem der vorhergehenden Ansprüche, wobei die Magnetanordnung (x00) weiterhin einen zweiten flachen Polschuh (x70) mit einer Länge L9 aufweist, wobei der zweite Polschuh unterhalb der zweiten Magnetfelderzeugungsvorrichtung (x40) angeordnet ist und somit der Umgebung zugewandt ist.

4. Das Verfahren nach einem der vorhergehenden Ansprüche, wobei die Magnetanordnung (x00) weiterhin eine magnetisierte Platte (x80) aufweist, die eine oder mehrere Gravuren und/oder Aussparungen aufweist, die ein oder mehrere Zeichen darstellen,
wobei die magnetisierte Platte (x80) vorzugsweise aus einem Verbundmaterial hergestellt ist, das ein Polymer und ein permanentmagnetisches Pulvermaterial aufweist, und
wobei die magnetisierte Platte (x80) auf der Oberseite der ersten Magnetfelderzeugungsvorrichtung (x30) angeordnet ist und somit dem Substrat (x20) zugewandt ist.

5. Das Verfahren nach einem der vorhergehenden Ansprüche, wobei der flache Polschuh (x50) aus Eisen hergestellt ist.

6. Das Verfahren nach einem der vorhergehenden Ansprüche, wobei die erste Magnetfelderzeugungsvorrichtung (x30) und die zweite erste Magnetfelderzeugungsvorrichtung (x40) scheibenförmige Magnetfelderzeugungsvorrichtungen sind und ihre Länge L1 und L3 ihrem Durchmesser entsprechen oder quadratförmige Magnetfelderzeugungsvorrichtungen sind und ihre Länge L1 und L3 ihrer Breite entsprechen.

7. Das Verfahren nach einem der vorhergehenden Ansprüche, wobei die nicht-sphärischen magnetischen oder magnetisierbaren Pigmentpartikel aus der Gruppe ausgewählt sind, die aus magnetischen Dünnfilminterferenzpigmenten, magnetischen cholesterischen Flüssigkristallpigmenten und Mischungen davon besteht.

8. Das Verfahren nach einem der vorhergehenden Ansprüche, wobei der Schritt iii) teilweise gleichzeitig mit dem Schritt ii) durchgeführt wird.

9. Das Verfahren nach einem der vorhergehenden Ansprüche, wobei die nicht-sphärischen magnetischen oder magnetisierbaren Partikel plättchenförmige Pigmentpartikel sind, und wobei das genannte Verfahren weiter einen Schritt des Aussetzens der durch Strahlung härtbaren Beschichtungszusammensetzung einem dynamischen Magnetfeld einer ersten Magnetfelderzeugungsvorrichtung aufweist, um mindestens einen Teil der plättchenförmigen magnetischen oder magnetisierbaren Pigmentpartikel biaxial zu orientieren, wobei der genannte Schritt nach dem Schritt i) und vor dem Schritt ii) durchgeführt wird.

10. Eine Optikeffektschicht (OEL) (x10), die durch das Verfahren nach einem der Ansprüche 1 bis 9 hergestellt ist.

11. Ein Sicherheitsdokument oder ein dekoratives Element oder Objekt, aufweisend eine oder mehrere in Anspruch 10 beschriebene Optikeffektschichten (OEL).

12. Eine Magnetanordnung (x00) zur Herstellung einer Optikeffektschicht (OEL) (x10) auf einem Substrat (x20), wobei die OEL einen Eindruck eines mondsichelförmigen Elements vermittelt, das sich beim Kippen der Optikeffektschicht (OEL) bewegt oder dreht und orientierte nicht-sphärische magnetische oder magnetisierbare Pigmentpartikel in einer durch Strahlung härtbaren Beschichtungszusammensetzung aufweist, wobei die Magnetanordnung (x00) aufweist:
a) eine erste Magnetfelderzeugungsvorrichtung (x30), deren Nord-Süd-Magnetachse im Wesentlichen senkrecht zur Oberfläche des Substrats (x20) verläuft und die eine Länge L1 aufweist;
b) eine zweite Magnetfelderzeugungsvorrichtung (x40), deren Nord-Süd-Magnetachse im Wesentlichen senkrecht zur Oberfläche des Substrats (x20) verläuft und die eine Länge L3 aufweist,
c) einen flachen Polschuh (x50) ohne jegliche Vorsprünge oder Erhebungen, die sich über die Oberfläche des Polschuhs hinaus erstrecken, und das eine Länge L5 aufweist,
wobei die erste Magnetfelderzeugungsvorrichtung (x30) und die zweite Magnetfelderzeugungsvorrichtung (x40) die gleiche Richtung des Magnetfeldes haben,
wobei die erste Magnetfelderzeugungsvorrichtung (x30) dem Substrat (x20) zugewandt und oben auf dem Polschuh (x50) angeordnet ist,
wobei die zweite Magnetfelderzeugungsvorrichtung (x40) der Umgebung zugewandt und unterhalb des Polschuhs (x50) angeordnet ist,
wobei die Länge L1 der ersten Magnetfelderzeugungsvorrichtung (x30) kleiner ist als die Länge L3 der zweiten Magnetfelderzeugungsvorrichtung (x40),
wobei die Länge L1 der ersten Magnetfelderzeugungsvorrichtung (x30) kleiner ist als die Länge L5 des Polschuhs (x50), und
wobei die Länge L3 der zweiten Magnetfelderzeugungsvorrichtung (x40) kleiner ist als die Länge L5 des Polschuhs (x50).

13. Die Magnetanordnung (x00) nach Anspruch 12, die ferner eine nichtmagnetische Platte (x60) aufweist und/oder
weiter einen zweiten flachen Polschuh (x70) mit einer Länge L9 aufweist, wobei der zweite Polschuh unterhalb der zweiten Magnetfelderzeugungsvorrichtung (x40) und damit der Umgebung zugewandt angeordnet ist und wobei die Länge L1 der ersten Magnetfelderzeugungsvorrichtung (x30) kleiner ist als die Länge L9 des zweiten Polschuhs (x70) und die Länge L3 der zweiten Magnetfelderzeugungsvorrichtung (x40) kleiner ist als die Länge L9 des zweiten Polschuhs (x70), und/oder
ferner eine magnetisierte Platte (x80) aufweist, die eine oder mehrere Gravuren und/oder Aussparungen aufweist, die eine oder mehrere Angaben darstellen, wobei die magnetisierte Platte (x80) vorzugsweise aus einem Verbundmaterial hergestellt ist, das ein Polymer und ein permanentmagnetisches Pulvermaterial aufweist, und wobei die magnetisierte Platte (x80) oben auf der ersten Magnetfelderzeugungsvorrichtung (x30) angeordnet ist und somit dem Substrat (x20) zugewandt ist.

14. Die Magnetanordnung nach Anspruch 12 oder 13, wobei die Magnetanordnung (x00) in einem Halter (x01) angeordnet ist, der auf einer Übertragungsvorrichtung, vorzugsweise einem rotierenden Magnetzylinder, angebracht ist.

15. Eine Druckvorrichtung, die einen rotierenden Magnetzylinder aufweist, der mindestens eine der in einem der Ansprüche 12 bis 14 genannten Magnetanordnungen (x00) aufweist, oder eine Flachbettdruckeinheit, die mindestens eine der in einem der Ansprüche 12 bis 14 beschriebenen Magnetanordnungen (x30) aufweist.

## Revendications

1. Procédé de production d'une couche à effet optique (CEO) (x10) sur un substrat (x20), ledit procédé comprenant les étapes consistant à :
i) appliquer sur une surface de substrat (x20) d'une composition de revêtement durcissable par rayonnement comprenant des particules de pigment magnétiques ou magnétisables non sphériques, ladite composition de revêtement durcissable par rayonnement étant dans un premier état, ledit premier état étant un état liquide ;
ii) exposer la composition de revêtement durcissable par rayonnement à un champ magnétique d'un ensemble magnétique (x00) comprenant :
a) un premier dispositif générateur de champ magnétique (x30) ayant son axe magnétique nord-sud sensiblement perpendiculaire à la surface de substrat (x20) et ayant une longueur L1 ;
b) un deuxième dispositif générateur de champ magnétique (x40) ayant son axe magnétique nord-sud sensiblement perpendiculaire à la surface de substrat (x20) et ayant une longueur L3,
c) une pièce polaire (x50) plate ne présentant aucune indentation ou saillie s'étendant à l'extérieur de la surface de ladite pièce polaire et ayant une longueur L5,
dans lequel le premier dispositif générateur de champ magnétique (x30) et le deuxième dispositif générateur de champ magnétique (x40) ont une même direction de champ magnétique,
dans lequel le premier dispositif générateur de champ magnétique (x30) est face au substrat (x20) et est disposé au-dessus de la pièce polaire (x50),
dans lequel le deuxième dispositif générateur de champ magnétique (x40) est face à l'environnement et est disposé en dessous de la pièce polaire (x50) plate,
dans lequel la longueur L1 du premier dispositif générateur de champ magnétique (x30) est plus petite que la longueur L3 du deuxième dispositif générateur de champ magnétique (x40),
dans lequel la longueur L1 du premier dispositif générateur de champ magnétique (x30) est plus petite que la longueur L5 de la pièce polaire (x50) plate, et
dans lequel la longueur L3 du deuxième dispositif générateur de champ magnétique (x40) est plus petite que la longueur L5 de la pièce polaire (x50),
de façon à orienter au moins une partie des particules de pigment magnétiques ou magnétisables non sphériques ; et
iii) durcissement au moins partiel de la composition de revêtement durcissable par rayonnement de l'étape ii) dans un deuxième état de façon à fixer les particules de pigment magnétiques ou magnétisables non sphériques dans leurs positions et orientations adoptées,
dans lequel la couche à effet optique fournit une impression optique d'un croissant de lune se déplaçant et tournant lors de l'inclinaison du substrat comprenant la couche à effet optique (CEO).

2. Procédé selon la revendication 1, dans lequel l'ensemble magnétique (x00) comprend en outre une plaque non magnétique (x60), de préférence faite de polyoxyméthylène (POM).

3. Procédé selon une quelconque revendication précédente, dans lequel l'ensemble magnétique (x00) comprend en outre une deuxième pièce polaire (x70) plate ayant une longueur L9, dans lequel ladite deuxième pièce polaire est disposée en dessous du deuxième dispositif générateur de champ magnétique (x40) étant ainsi face à l'environnement.

4. Procédé selon une quelconque revendication précédente, dans lequel l'ensemble magnétique (x00) comprend en outre une plaque aimantée (x80) comprenant une ou plusieurs gravures et/ou découpes représentant une ou plusieurs indications,
dans lequel ladite plaque aimantée (x80) est de préférence faite d'un matériau composite comprenant un polymère et un matériau de poudre magnétique permanente, et
dans lequel la plaque aimantée (x80) est disposée au-dessus du premier dispositif générateur de champ magnétique (x30) étant ainsi face au substrat (x20).

5. Procédé selon une quelconque revendication précédente, dans lequel la pièce polaire (x50) plate est faite de fer.

6. Procédé selon une quelconque revendication précédente, dans lequel le premier dispositif générateur de champ magnétique (x30) et le deuxième dispositif générateur de champ magnétique (x40) sont des dispositifs de génération de champ magnétique en forme de disque et leur longueur L1 et L3 correspondent à leur diamètre ou sont des dispositifs de génération de champ magnétique de forme carrée et leur longueur L1 et L3 correspondent à leur largeur.

7. Procédé selon une quelconque revendication précédente, dans lequel les particules de pigment magnétiques ou magnétisables non sphériques sont sélectionnées dans le groupe constitué des pigments magnétiques interférentiel en couches minces, des pigments magnétiques à cristaux liquides cholestériques et de leurs mélanges.

8. Procédé selon une quelconque revendication précédente, dans lequel l'étape iii) est réalisée en partie simultanément avec l'étape ii).

9. Procédé selon une quelconque revendication précédente, dans lequel les particules magnétiques ou magnétisables non sphériques, sont des particules de pigment en forme de plaquettes, et dans lequel ledit procédé comprend en outre une étape d'exposition de la composition de revêtement durcissable par rayonnement à un champ magnétique dynamique d'un premier dispositif générateur de champ magnétique de façon à orienter de manière biaxiale au moins une partie des particules de pigment magnétiques ou magnétisables en forme de plaquettes, ladite étape étant réalisée après l'étape i) et avant l'étape ii).

10. Couche à effet optique (CEO) (x10) produite par le procédé selon l'une quelconque des revendications 1 à 9.

11. Document de sécurité ou élément ou objet décoratif comprenant une ou plusieurs couches à effet optique (CEO) selon la revendication 10.

12. Ensemble magnétique (x00) de production d'une couche à effet optique (CEO) (x10) sur un substrat(x20), ladite CEO fournissant une impression d'un élément en forme de croissant de lune se déplaçant ou tournant lors de l'inclinaison de la couche à effet optique (CEO) et comprenant des particules de pigment magnétiques ou magnétisables non sphériques orientées dans une composition de revêtement durcissable par rayonnement durcie, dans lequel ledit ensemble magnétique (x00) comprend :
a) un premier dispositif générateur de champ magnétique (x30) ayant son axe magnétique nord-sud sensiblement perpendiculaire à la surface de substrat (x20) et ayant une longueur L1 ;
b) un deuxième dispositif générateur de champ magnétique (x40) ayant son axe magnétique nord-sud sensiblement perpendiculaire à la surface de substrat (x20) et ayant une longueur L3,
c) une pièce polaire (x50) plate ne présentant aucune indentation ou saillie s'étendant à l'extérieur de la surface de ladite pièce polaire et ayant une longueur L5,
dans lequel le premier dispositif générateur de champ magnétique (x30) et le deuxième dispositif générateur de champ magnétique (x40) ont une même direction de champ magnétique,
dans lequel le premier dispositif générateur de champ magnétique (x30) est face au substrat (x20) et est disposé au-dessus de la pièce polaire (x50),
dans lequel le deuxième dispositif générateur de champ magnétique (x40) est face à l'environnement et est disposé en dessous de la pièce polaire (x50),
dans lequel la longueur L1 du premier dispositif générateur de champ magnétique (x30) est plus petite que la longueur L3 du deuxième dispositif générateur de champ magnétique (x40),
dans lequel la longueur L1 du premier dispositif générateur de champ magnétique (x30) est plus petite que la longueur L5 de la pièce polaire (x50), et
dans lequel la longueur L3 du deuxième dispositif générateur de champ magnétique (x40) est plus petite que la longueur L5 de la pièce polaire (x50).

13. Ensemble magnétique (x00) selon la revendication 12 comprenant en outre une plaque non magnétique (x60) et/ou
comprenant en outre une deuxième pièce polaire (x70) plate ayant une longueur L9, dans lequel ladite deuxième pièce polaire est disposée en dessous du deuxième dispositif générateur de champ magnétique (x40) étant ainsi face à l'environnement et dans lequel la longueur L1 du premier dispositif générateur de champ magnétique (x30) est plus petite que la longueur L9 de ladite deuxième pièce polaire (x70) et la longueur L3 du deuxième dispositif générateur de champ magnétique (x40) est plus petite que la longueur L9 de ladite deuxième pièce polaire (x70), et/ou comprenant en outre une plaque aimantée (x80) comprenant une ou plusieurs gravures et/ou découpes représentant une ou plusieurs indications, dans lequel ladite plaque aimantée (x80) est de préférence faite d'un matériau composite comprenant un polymère et un matériau de poudre magnétique permanente, et dans lequel la plaque aimantée (x80) est disposée au-dessus du premier dispositif générateur de champ magnétique (x30) étant ainsi face au substrat (x20).

14. Ensemble magnétique (x00) selon la revendication 12 ou 13, dans lequel l'ensemble magnétique (x00) est disposé dans un support (x01) monté sur un dispositif de transfert étant de préférence un cylindre magnétique rotatif.

15. Appareil d'impression comprenant un cylindre magnétique rotatif comprenant au moins l'un des ensembles magnétiques (x00) selon l'une quelconque des revendications 12 à 14 ou une unité d'impression à plat comprenant au moins l'un des ensembles magnétiques (x30) selon l'une quelconque des revendications 12 à 14.
